(19) Europäisches Patentamt
European Patent Office
Office européen des brevets

(11) EP 4 600 051 A1

(12) EUROPEAN PATENT APPLICATION

(43) Date of publication:
**13.08.2025 Bulletin 2025/33**

(21) Application number: **25152048.2**

(22) Date of filing: **15.01.2025**

(51) International Patent Classification (IPC):
***B60C 1/00*** *(2006.01)* ***C08L 7/00*** *(2006.01)*

(52) Cooperative Patent Classification (CPC):
(C-Sets available)
**C08L 7/00; B60C 1/0016; B60C 11/005; B60C 11/0058;** B60C 2011/0016; B60C 2011/0025
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.02.2024 JP 2024018437**

(71) Applicant: **Sumitomo Rubber Industries, Ltd.**
**Kobe-shi, Hyogo 651-0072 (JP)**

(72) Inventor: **MIZOUE, Yoko**
**Kobe-shi, 651-0072 (JP)**

(74) Representative: **Manitz Finsterwald**
**Patent- und Rechtsanwaltspartnerschaft mbB**
**Martin-Greif-Straße 1**
**80336 München (DE)**

# (54) TIRE

(57) Provided is a tire that uses sustainable materials and has sufficiently improved wet grip performance during high-speed cornering, characterized in that the tire has a plurality of land portions and groove portions provided on the surface of a tread portion, the tread portion is formed by laminating a cap tread and a base tread from the ground contact side, with a negative ratio Nr (%) within the ground contact width being less than 20%, both of the cap tread and the base tread being are of a rubber composition containing vulcanized rubber powder, and when the area ratio occupied by the vulcanized rubber powder in the cap tread is $Sr_{out}$ (%) and the area ratio occupied by the vulcanized rubber powder in the base tread is $Sr_{in}$ (%), Nr, $Sr_{out}$ and $Sr_{in}$ satisfy the following (formula 1):

$$3 \geqq (Sr_{out} + Sr_{in})/Nr \qquad \text{(formula 1).}$$

EP 4 600 051 A1

(52) Cooperative Patent Classification (CPC): (Cont.)

C-Sets
**C08L 7/00, C08L 9/00, C08L 19/003, C08L 91/00, C08K 3/04, C08K 3/22, C08K 5/09, C08K 5/18, C08K 3/06, C08K 5/47;**
**C08L 7/00, C08L 9/06, C08L 19/003, C08L 91/00, C08K 3/04, C08K 3/22, C08K 5/09, C08K 3/06, C08K 5/47**

## Description

[TECHNICAL FIELD]

The present invention relates to a tire.

[BACKGROUND ART]

As techniques for improving the wet grip performance of tires, various proposals have been made regarding tire shapes, rubber composition compounding, and the like (for example, Patent Documents 1 to 3).

[PRIOR ART DOCUMENTS]

[PATENT DOCUMENT]

[Patent Document 1] JP 2016-043709 A
[Patent Document 2] JP 2018-135436 A
[Patent Document 3] JP 2021-167401 A

[SUMMARY OF INVENTION]

[PROBLEM TO BE SOLVED BY THE INVENTION]

However, with the construction of expressways and improvements in vehicle performance in recent years, it is not uncommon to drive at high speeds, and there is an increasing demand for improving grip performance when turning at high speeds on wet roads (wet grip performance during high-speed turns).

In addition, in recent years, the momentum for environmental protection has been increasing, and there is an increasing demand for tires that use sustainable materials to have a reduced environmental impact. However, if sustainable materials are used without due consideration, although the environmental impact can be reduced, there is a risk of reducing the performance of the tire. For example, vulcanized rubber powder, which is a recycled material obtained by crushing vulcanized rubber, has been attracting attention in recent years as a sustainable material, and there have been attempts to incorporate it into rubber compositions forming tires, but there is a risk of reducing the performance of the tire.

In view of the above-mentioned problems, an object of the present invention is to provide a tire that uses vulcanized rubber powder, which is a sustainable material, and yet has sufficiently improved wet grip performance during high-speed cornering.

[MEANS FOR SOLVING THE PROBLEM]

The present invention relates to

a tire having a plurality of land portions and groove portions on a surface of a tread portion, wherein
the tread portion is formed by laminating a cap tread and a base tread from the ground contact surface side,
a negative ratio Nr (%) within the ground contact surface width is less than 20%,
the cap tread and the base tread are both made of a rubber composition containing vulcanized rubber powder, and
, when the area ratio occupied by the vulcanized rubber powder in the cap tread is $Sr_{out}$ (%) and the area ratio occupied by the vulcanized rubber powder in the base tread is $Sr_{in}$ (%), Nr, $Sr_{out}$ and $Sr_{in}$ satisfy the following (formula 1).

$$3 \geqq (Sr_{out} + Sr_{in})/Nr \qquad \text{(formula 1)}$$

[EFFECT OF THE INVENTION]

According to the present invention, it is possible to provide a tire that uses sustainable materials and yet has sufficiently improved wet grip performance during high-speed cornering.

[BRIEF DESCRIPTION OF THE DRAWINGS]

[FIG. 1] This figure is a schematic cross-sectional view showing the configuration of a tire according to one embodiment of the present invention.

[EMBODIMENTS FOR CARRYING OUT THE INVENTION]

[1] Features s of the tire according to the present invention

First, the features of the tire according to the present invention will be described.

1. Overview

The tire according to the present invention is a tire having a plurality of land portions and groove portions on the surface of a tread portion, wherein the tread portion is formed by laminating a cap tread and a base tread from the ground contact side, with a negative ratio Nr (%) within the ground contact width being less than 20%, and both the cap tread and the base tread are made of a rubber composition containing vulcanized rubber powder.

Furthermore, when the area ratio occupied by the vulcanized rubber powder in the cap tread is $Sr_{out}$ (%) and the area ratio occupied by the vulcanized rubber powder in the base tread is $Sr_{in}$ (%), Nr, $Sr_{out}$ and $Sr_{in}$ satisfy the following (formula 1).

$$3 \geqq (Sr_{out} + Sr_{in})/Nr \qquad \text{(formula 1)}$$

These features make it possible to provide a tire that uses sustainable materials and has sufficiently improved wet grip performance during high-speed cornering, as will be described later.

2. Mechanism of the effect manifestation of the tire according to the present invention

The mechanism by which the above-mentioned effects are exhibited in the tire according to the present invention is believed to be as follows.

(1) Negative ratio

In the tire according to the present invention, the negative ratio Nr (%) within the ground contact width of the tread portion is set to less than 20%.

By controlling the negative ratio Nr within the ground contact width to a small value of less than 20%, a large contact area between the tire and the road surface is ensured, and the tire can firmly grip the road surface and move in accordance with the road surface even when turning at high speed on a wet road surface, so that the wet grip performance during high-speed turning is thought to be sufficiently improved. It is more preferably 15% or less, and further preferably it is 10% or less.

In the above, the negative ratio Nr (%) within the ground contact width refers to the ratio (%) of the total opening area of the multiple grooves to the virtual contact area of the tread portion with all the multiple grooves filled (the total contact area over the entire circumference of the tire that comes into contact with the ground when a tire having a tread portion with all the grooves filled is in a standardized state, and the tread portion is pressed against a flat surface at a camber angle of 0° under standardized internal pressure and standardized load conditions). The virtual contact area and the area of the grooves can be calculated by determining the area of the grooves on the ground contact surface around the entire circumference of the tire, and can be simply measured by applying ink or the like to the tire surface and transferring it.

Specifically, the contact shape is obtained by assembling the tire on a standardized rim, applying standardized internal pressure, leaving it at 25°C for 24 hours, applying ink to the tire surface, pressing it against cardboard under a standardized load (camber angle is 0°), and transferring the ink to paper. The tire is rotated at 72 degrees each time in the circumferential direction and the ink is transferred at five locations. That is, the contact shape is obtained five times. For the five contact shapes, the average value of the maximum length in the tire axial direction is L, and the average value of the length in the direction perpendicular to the axial direction is W. The negative ratio (%) is calculated by

[1- {average area of the five contact shapes (ink parts) transferred to the cardboard/(L×W)}] × 100(%).

Here, the average values of the length and area are simple averages of the five values, and L × W in the formula

means the area of a virtual surface obtained by connecting the blanks caused by the main grooves and lateral grooves when the contact shape is obtained.

Here, the term " standardized condition" refers to a state in which the tire is installed on a standardized rim, inflated to a standardized internal pressure, and no load is being applied.

Note that "a standardized rim" is a rim defined for each tire in the standard system including the standard on which the tire is based. For example, in the case of JATMA (Japan Automobile Tire Association), it is the standard rim in applicable sizes described in the "JATMA YEAR BOOK", in the case of "ETRTO (The European Tire and Rim Technical Organization)", it is "Measuring Rim" described in "STANDARDS MANUAL", and in the case of TRA (The Tire and Rim Association, Inc.), it is "Design Rim" described in "YEAR BOOK ". Reference is made in the order of JATMA, ETRTO, and TRA, and if there is an applicable size at the time of reference, that standard is followed. In the case of tires that are not specified in the standard, it refers a rim that can be assembled and can maintain internal pressure, that is, the rim that does not cause air leakage from between the rim and the tire, and has the smallest rim diameter, and then the narrowest rim width.

And, "standardized internal pressure" refers to the air pressure set for each tire by each standard in the standard system including the standard on which the tire is based. For JATMA, it refers to the "maximum air pressure", for ETRTO, it refers to the "INFLATION PRESSURE", and for TRA, it refers to the maximum value listed in the table "TIRE LOAD LIMITS AT VARIOUS COLD INFLATION PRESSURES". Refer to JATMA, ETRTO, and TRA in that order, and follow the standard if there is an applicable size at the time of reference. In the case of a tire not specified in the standard, it refers to the standardized internal pressure (250 kPa or more) of another tire size (defined in the standard) that is described with the standardized rim as the standard rim. Note that, if multiple standardized internal pressures of 250 kPa or more are listed, it refers to the minimum value among them.

The "standardized load" is the load determined for each tire by each standard in the standard system including the standard on which the tire is based, and refers to the maximum mass that can be loaded on the tire. In the case of JATMA, it refers to the maximum load capacity, in the case of ETRTO, it refers to the "LOAD CAPACITY", and in the case of TRA, it refers to the maximum value described in the table "TIRE LOAD LIMITS AT VARIOUS COLD INFLATION PRESSURES". As in the case of the " standardized rim" and " standardized internal pressure" described above, JATMA, ETRTO, and TRA are referred to in that order and their standards are followed. In the case of a tire not determined by a standard, the standardized load WL is calculated as follows:

$$V=\{(Dt/2)^2 - (Dt/2-Ht)^2\} \times \pi \times Wt$$

$$W_L = 0.000011 \times V + 175$$

$W_L$: Standardized load (kg)
V: Virtual volume of the tire ($mm^3$)
Dt: tire outer diameter Dt (mm)
Ht: tire section height (mm)
Wt: tire section width (mm)

(2) Cap tread and base tread

In the tire according to the present invention, the tread portion is formed by laminating a cap tread and a base tread from the ground contact side, and both the cap tread and the base tread are made of a rubber composition containing vulcanized rubber powder.

By compounding vulcanized rubber powder in both the cap tread and the base tread so that the amount is equal to or greater than a specified area ratio, the contact area between the cap tread and the base tread can be increased, and the interface between the cap tread and the base tread can be strongly reinforced. This makes it easier for force to be applied between the cap tread and the base tread, and therefore makes it easier for the entire tread to conform to the road surface.

Furthermore, as mentioned above, by controlling the negative ratio to a small value, a large contact area between the tire and the road surface can be ensured. Therefore, these factors work together to enable the tire to firmly grip the road surface and move in accordance with the road surface, even when making high-speed turns on a wet road surface, and it is believed that this sufficiently improves wet grip performance during high-speed turns.

However, if the content of the vulcanized rubber powder is too high, the area ratio of the vulcanized rubber powder becomes too large, which may reduce the reinforcing effect in the tread portion, which is undesirable.

That is, in order to improve the wet grip performance during high-speed cornering, it is necessary to appropriately control the area ratio of the vulcanized rubber powder and the negative ratio Nr.

Specifically, when the area ratio of the vulcanized rubber powder in the cap tread is $Sr_{out}$ (%) and the area ratio of

the vulcanized rubber powder in the base tread is $Sr_{in}$ (%), if [$(Sr_{out} + Sr_{in})$ /N r] is 3 or less (i.e. $3 \geqq (Sr_{out} + Sr_{in})/Nr$), the above-mentioned effects work together to enable the vulcanized rubber powder to strongly reinforce the interface between the cap tread and the base tread, and even when cornering at high speed on a wet road surface, the tire can firmly grip the road surface and move in accordance with the road surface, and it is believed that the wet grip performance during high-speed cornering is sufficiently improved. [$(Sr_{out} + Sr_{in})$ /Nr] is more preferably 1.5 or less, further preferably 1.0 or less, further preferably 0.90 or less, further preferably 0.57 or less, further preferably 0.5 or less, further preferably 0.38 or less, and particularly preferably 0.36 or less.

The above-mentioned "area ratio occupied by the vulcanized rubber powder" can be obtained by taking images of a sample prepared by cutting the tread portion so that a plane parallel to the tread surface becomes the cross section for observation using a scanning electron microscope, determining the area of the region occupied by the vulcanized rubber powder in the images of the cut surfaces of the cap tread and base tread obtained, and calculating the ratio of this area to the area of the entire cut surfaces.

[2] More preferred embodiments of the tire according to the present invention

The tire according to the present invention can achieve even greater effects by adopting the following embodiments.

1. Average particle size of vulcanized rubber powder

In the present invention, the average particle size of the vulcanized rubber powder is preferably 550 pm or less. Since the vulcanized rubber powder having such a small particle size has a large specific surface area, it is believed that the iodine value increases, the surface reactivity is improved, and a large structure can be formed. As a result, the physical bonding force with the polymer in the rubber composition is increased, so that the tread rubber is more strongly reinforced and the rigidity is increased, and the wet grip performance during high-speed cornering is further improved. More preferably, the average particle size is 350 pm or less, further preferably it is 300 pm or less, and particularly preferably it is 250 pm or less. The lower limit is not particularly limited, but is preferably 50 pm or more, more preferably 80 pm or more, further preferably 100 pm or more, and particularly preferably 150 pm or more. The average particle size of the vulcanized rubber powder described above is the average particle size based on mass calculated from the particle size distribution measured in accordance with JIS Z8815:1994.

Considering the above description from the viewpoint of particle size, in the present invention, the particle size of the vulcanized rubber powder is preferably finer than 15 mesh pass, more preferably finer than 20 mesh pass, and further preferably finer than 30 mesh pass, as measured using a test sieve specified in JIS Z8801. Also, although not particularly limited, it is preferably coarser than 200 mesh pass, more preferably coarser than 100 mesh pass, and further preferably coarser than 50 mesh pass.

2. Loss tangent

In the present invention, the loss tangent (30°C tan $\delta$) of the cap tread measured under the conditions of temperature 30°C, frequency 10Hz, initial strain 5%, dynamic strain rate 1%, and deformation mode: tensile is preferably 0.22 or less, more preferably 0.20 or less, further preferably 0.18 or less, further preferably 0.17 or less, and particularly preferably 0.169 or less. The lower limit is not particularly limited, but is preferably 0.10 or more, more preferably 0.12 or more, further preferably 0.14 or more, further preferably 0.159 or more, further preferably 0.16 or more, further preferably 0.161 or more, and particularly preferably 0.162 or more.

On the other hand, the 30°C tan $\delta$ of the base tread is preferably 0.08 or less, more preferably 0.07 or less, further preferably 0.06 or less, further preferably 0.058 or less, further preferably 0.056 or less, and particularly preferably 0.055 or less. The lower limit is not particularly limited, but is preferably 0.03 or more, more preferably 0.04 or more, and further preferably 0.05 or more.

The ratio of the 30°C tan $\delta$ of the cap tread to the 30°C tan $\delta$ of the base tread is preferably 2.50 or more, more preferably 2.75 or more, further preferably 2.80 or more, further preferably 2.85 or more, further preferably 2.88 or more, further preferably 2.89 or more, and particularly preferably 2.91 or more. The upper limit is, for example, preferably 3.15 or less, more preferably 3.10 or less, further preferably 3.05 or less, and particularly preferably 3.00 or less.

The loss tangent tan $\delta$ is a viscoelastic parameter that indicates the energy absorption performance, and by appropriately controlling the 30°C tan $\delta$ of the cap tread and the base tread to such values, the input-response phase difference between the cap tread and the base tread becomes small, so that the transmission of force from the cap tread, which is the contact surface, to the inner base tread becomes faster, and good responsiveness can be ensured even during cornering, and it is believed that the wet grip performance during high-speed cornering will be further improved.

In addition, the tread portion that bends when it comes into contact with the road surface during rolling can easily

return to its original shape when it leaves the road surface, and can easily bend again when it re-contacts the ground. This is also thought to further improve wet grip performance during high-speed cornering.

In the above, the loss tangent (tan $\delta$) can be measured by using a viscoelasticity measuring device such as "Eplexor (registered trademark)" manufactured by GABO Corporation.

3. Elongation at break

In the present invention, the elongation at break (EB) of the cap tread measured in accordance with JIS K6251;2017 is preferably 550% or more. More preferably, it is 580% or more, further preferably, it is 585% or more, further preferably, it is 597% or more, further preferably, it is 600% or more, and it is particularly preferably, it is 603% or more. The upper limit is not particularly limited, but it is preferably 650% or less, more preferably, it is 630% or less, further preferably, it is 621% or less, and it is particularly preferably, it is 610% or less.

On the other hand, the elongation at break (EB) of the base tread is preferably 420% or more, more preferably 440% or more, further preferably 460% or more, further preferably 461% or more, and particularly preferably 466% or more. The upper limit is not particularly limited, but is preferably 520% or less, more preferably 500% or less, even more preferably 480% or less, even more preferably 475% or less, and particularly preferably 471% or less.

The ratio of the EB of the cap tread to the EB of the base tread is preferably 1.20 or more, more preferably 1.25 or more, further preferably 1.27 or more, further preferably 1.28 or more, and particularly preferably 1.29 or more. On the other hand, the upper limit is preferably 1.40 or less, more preferably 1.35 or less, further preferably 1.32 or less, and particularly preferably 1.31 or less.

The breaking elongation EB is an index showing the ability of the rubber to follow deformations that occur due to the force applied to it. By appropriately controlling the EB of the cap tread and base tread to such values, it is possible to easily follow deformations during high-speed cornering and ensure good responsiveness, and it is believed to further improve wet grip performance during high-speed cornering.

4. Land ratio in the shoulder region of the tread portion

In the present invention, the land ratio of the shoulder region located on the outer side of the tread contact surface is preferably less than 3%. In this way, by lowering the land ratio of the shoulder region, even if the tire has a small negative ratio within the contact surface width, the shoulder region can be sufficiently drained, so that it is believed the wet grip performance during high-speed cornering is further improved. It is more preferably less than 2%. The lower limit is not particularly limited, but is preferably more than 0% and more preferably more than 1%.

In the above, the land ratio refers to the ratio (%) of the actual contact area when the grooves are formed to the virtual contact area of the tread portion, and can be measured in the same manner as in the measurement of the negative ratio described above, and is calculated as {average area of five contact shapes (ink parts) transferred to the cardboard/L $\times$ W)}$\times$100(%).

[3] Embodiments

Hereinafter, the present invention will be described in detail based on the embodiments.

1. Tire configuration

Fig. 1 is a schematic cross-sectional view showing the structure of a tire according to an embodiment of the present invention. In Fig. 1, the up-down direction is the radial direction of the tire, the left-right direction is the axial direction, and the direction perpendicular to the paper surface is the circumferential direction. Note that the dashed dotted line CL represents the equatorial plane of the tire 1.

As shown in FIG. 1, a tire 1 includes a tread portion 4, a sidewall 6, a clinch 8, a bead 10, a carcass 12, a belt 14, a band 16, an inner liner 18, and a chafer 20. The bead 10 includes a bead core 30 and a bead apex 32. Note that 2 and 3 respectively indicate a contact surface region and a shoulder region in the axial direction of the tire.

A tread pattern is formed on the surface of the tread portion 4 by forming a plurality of grooves 22 and a plurality of land portions 23. The tread 4 is formed by laminating a base tread 24 and a cap tread 26, and has a negative ratio within the contact ground width of less than 20%.

The carcass 12 is composed of a plurality of carcass plies (first to third in FIG. 1) in which parallel cords are covered with a topping rubber. The cords are preferably made of organic fibers, such as polyester fibers, nylon fibers, rayon fibers, polyethylene naphthalate fibers, and aramid fibers.

The belt 14 is composed of a plurality of layers (50 and outer layer 52 in FIG. 1) in which parallel cords are coated with topping rubber, and reinforces the carcass 12. In each layer, the cords are inclined with respect to the equator plane,

and the inner layer 50 and the outer layer 52 are inclined in opposite directions to each other. As the cords, steel cords are preferable, but organic fiber cords may also be used.

The band 16 is located radially outward of the belt 14. The band 16 is made of a cord and a topping rubber. The cord is wound in a spiral shape. The band 16 has a so-called jointless structure. The cord extends substantially in the circumferential direction. The belt 14 is restrained by the cord, so that lifting of the belt 14 is suppressed. The cord is preferably made of an organic fiber, and examples of the fiber include nylon fiber, polyester fiber, rayon fiber, polyethylene naphthalate fiber, and aramid fiber.

By adopting such a configuration and appropriately controlling the settings of the above-mentioned parameters, it is possible to obtain a tire with sufficiently improved wet grip performance during high-speed cornering.

2. Rubber composition

In the present invention, the rubber composition constituting the cap tread (rubber composition for cap tread) and the rubber composition constituting the base tread (rubber composition for base tread) can be obtained from the rubber components and other compounding materials described below.

(1) Compounding material

(a) Rubber component

The rubber component is not particularly limited, and rubbers (polymers) generally used in tire production can be used, such as isoprene-based rubbers such as natural rubber (NR), diene-based rubbers such as butadiene rubber (BR), styrene butadiene rubber (SBR), and nitrile rubber (NBR), and butyl-based rubbers such as butyl rubber. These polymers may be used alone or in combination of multiple types. Among them, it is preferable to use NR and BR, or NR and SBR in combination, and it is more preferable to use three types of NR, SBR, and BR.

($\alpha$) Isoprene rubber

Examples of isoprene-based rubber include natural rubber (NR), isoprene rubber (IR), reformed NR, modified NR, and modified IR. Among them, NR is preferred from the standpoint of excellent strength.

As the NR, for example, SVR-L, SIR20, RSS#3, TSR20, etc., which are common in the tire industry, can be used. As the IR, there is no particular limitation, and for example, IR2200 manufactured by Nippon Zeon Co., Ltd., etc., which are common in the tire industry, can be used. As the reformed NR, deproteinized natural rubber (DPNR), high-purity natural rubber (UPNR), etc., as the modified NR, epoxidized natural rubber (ENR), hydrogenated natural rubber (HNR), grafted natural rubber, etc., and as the modified IR, epoxidized isoprene rubber, hydrogenated isoprene rubber, grafted isoprene rubber, etc. can be mentioned. These may be used alone, or two or more of them may be used in combination.

In the rubber composition for cap tread and the rubber composition for base tread, the content of the isoprene-based rubber in 100 parts by mass of the rubber component is preferably 55 parts by mass or more, more preferably 60 parts by mass or more, further preferably 65 parts by mass or more, and particularly preferably 70 parts by mass or more. The upper limit is, for example, preferably 85 parts by mass or less, more preferably 80 parts by mass or less, and further preferably 75 parts by mass or less.

($\beta$) SBR

The weight average molecular weight of SBR is, for example, more than 100,000 and less than 2,000,000. The styrene content of SBR is, for example, preferably more than 5 mass%, more preferably more than 10 mass%, and further preferably more than 15 mass%. On the other hand, it is preferably less than 40 mass%, more preferably less than 35 mass%, and further preferably less than 30 mass%. The vinyl bond amount (amount of 1,2-bonded butadiene units) of SBR is, for example, preferably more than 5 mass%, more preferably more than 10 mass%, and further preferably more than 15 mass%. On the other hand, it is preferably less than 70 mass%, more preferably less than 40 mass%, and further preferably less than 30 mass%. The structure identification of SBR (measurement of styrene content and vinyl bond amount) can be performed using, for example, a JNM-ECA series device manufactured by JEOL Ltd.

The SBR is not particularly limited, and for example, emulsion-polymerized styrene-butadiene rubber (E-SBR), solution-polymerized styrene-butadiene rubber (S-SBR), etc. can be used. The SBR may be either unmodified SBR or modified SBR. In addition, hydrogenated SBR obtained by hydrogenating the butadiene portion of SBR may be used, and the hydrogenated SBR may be obtained by subsequently hydrogenating the BR portion of SBR, or a similar structure may be obtained by copolymerizing styrene, ethylene, and butadiene.

The modified SBR is preferably SBR having a functional group that interacts with a filler such as silica. Examples

thereof include

end-modified SBR (end-modified SBR having the above functional group at the terminal) in which at least one end of the SBR is modified with a compound having the above functional group (modifying agent),
main chain modified SBR having the functional group in the main chain,
main chain terminal modified SBR having the functional group at the main chain and the terminal (for example, a main chain terminal modified SBR having the above functional group to the main chain and having at least one end modified with the above modifying agent), and
end-modified SBR which is modified (coupled) with a polyfunctional compound having two or more epoxy groups in the molecule, and into which an epoxy group or hydroxyl group has been introduced,

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. These functional groups may have a substituent.

As the modified SBR, for example, SBR modified with a compound (modifying agent) represented by the following formula can be used.

[Chemical 1]

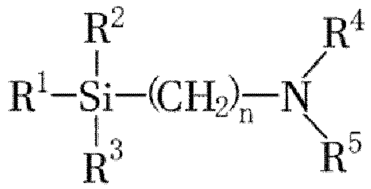

In the formula, $R^1$, $R^2$ and $R^3$ represent, the same or different, alkyl group, alkoxy group, silyloxy group, acetal group, carboxyl group (-COOH), mercapto group (-SH) or derivatives thereof. $R^4$ and $R^5$ represent, the same or differrent, hydrogen atoms or alkyl groups. $R^4$ and $R^5$ may be combined to form a ring structure with nitrogen atoms. n represents an integer.

As the modified SBR modified with the compound (modifying agent) represented by the above formula, SBR in which the polymerization terminals (active terminals) of solution-polymerized styrene-butadiene rubber (S-SBR) have been modified with the compound represented by the above formula (such as the modified SBR described in JP 2010-111753 A).

As $R^1$, $R^2$ and $R^3$, an alkoxy group is preferable (preferably an alkoxy group having 1 to 8 carbon atoms, more preferably an alkoxy group having 1 to 4 carbon atoms). As $R^4$ and $R^5$, an alkyl group (preferably an alkyl group having 1 to 3 carbon atoms) is preferable. n is preferably 1 to 5, more preferably 2 to 4, and even more preferably 3. Further, when $R^4$ and $R^5$ are bonded to form a ring structure together with a nitrogen atom, a 4- to 8-membered ring is preferable. The alkoxy group also includes a cycloalkoxy group (for example, cyclohexyloxy group) and an aryloxy group (for example, phenoxy group, benzyloxy group).

Specific examples of the modifying agent include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. These may be used alone or in combination of two or more.

Further, as the modified SBR, a modified SBR modified with the following compound (modifying agent) can also be used. Examples of the modifying agent include

polyglycidyl ethers of polyhydric alcohols such as ethylene glycol diglycidyl ether, glycerin triglycidyl ether, trimethylolethanetriglycidyl ether, and trimethylolpropane triglycidyl ether;
polyglycidyl ethers of aromatic compounds having two or more phenol groups such as diglycidylated bisphenol A;
polyepoxy compounds such as 1,4-diglycidylbenzene, 1,3,5-triglycidylbenzene, and polyepoxidized liquid polybutadiene;
epoxy group-containing tertiary amines such as 4,4' -diglycidyl-diphenylmethylamine, and 4,4'-diglycidyl-dibenzylmethylamine;
diglycidylamino compounds such as diglycidylaniline, N, N'-diglycidyl-4-glycidyloxyaniline, diglycidyl orthotoluidine,

tetraglycidylmetaxylenidiamine, tetraglycidylaminodiphenylmethane, tetraglycidyl-p -phenylenediamine, diglycidylaminomethylcyclohexane, and tetraglycidyl-1,3-bisaminomethylcyclohexane;

amino group-containing acid chlorides such as bis- (1-methylpropyl) carbamate chloride, 4-morpholincarbonyl chloride, 1-pyrrolidincarbonyl chloride, N, N-dimethylcarbamide acid chloride, and N, N-diethylcarbamide acid chloride;

epoxy group-containing silane compounds such as 1,3-bis-(glycidyloxypropyl) -tetramethyldisiloxane, and (3-glycidyloxypropyl) - pentamethyldisiloxane;

sulfide group-containing silane compound such as (trimethylsilyl) [3-(trimethoxysilyl) propyl] sulfide, (trimethylsilyl) [3-(triethoxysilyl) propyl] sulfide, (trimethylsilyl) [3- (tripropoxysilyl) propyl] sulfide, (trimethylsilyl) [3- (tributoxysilyl) propyl] sulfide, (trimethylsilyl) [3-(methyldimethoxysilyl) propyl] sulfide, (trimethylsilyl) [3-(methyldiethoxysilyl) propyl] sulfide, (trimethylsilyl) [3-(methyldipropoxysilyl) propyl] sulfide, and (trimethylsilyl) [3-(methyldibutoxysilyl) propyl] sulfide;

N-substituted aziridine compound such as ethyleneimine and propyleneimine;

alkoxysilanes such as methyltriethoxysilane, N, N-bis (trimethylsilyl) -3-aminopropyltrimethoxysilane, N, N-bis (trimethylsilyl) - 3-aminopropyltriethoxysilane, N, N-bis (trimethylsilyl) aminoethyltrimethoxysilane, and N, N-bis (trimethylsilyl) aminoethyltriethoxysilane;

(thio) benzophenone compound having an amino group and/or a substituted amino group such as 4-N, N-dimethylaminobenzophenone, 4-N, N-di-t-butylaminobenzophenone, 4-N, N-diphenylamino benzophenone, 4,4'-bis (dimethylamino) benzophenone, 4,4'-bis (diethylamino) benzophenone, 4,4'-bis (diphenylamino) benzophenone, and N, N, N', N'-bis-(tetraethylamino) benzophenone;

benzaldehyde compounds having an amino group and/or a substituted amino group such as 4-N, N-dimethylaminobenzaldehyde, 4-N, N-diphenylaminobenzaldehyde, and 4-N, N-divinylamino benzaldehyde;

N-substituted pyroridone such as N-methyl-2-pyrrolidone, N-vinyl-2-pyrrolidone, N-phenyl-2-pyrrolidone, N-t-butyl-2-pyrrolidone, and N-methyl-5-methyl-2 -pyrrolidone;

N- substituted piperidone such as methyl-2-piperidone, N-vinyl-2-piperidone, and N-phenyl-2-piperidone;

N-substituted lactams such as N-methyl -ε-caprolactam, N-phenyl-ε-caprolactum, N-methyl-ω-laurilolactum, N-vinyl-ω-laurilolactum, N-methyl-β-propiolactam, and N-phenyl-6-propiolactam; and

N, N-bis- (2,3-epoxypropoxy)-aniline, 4,4-methylene-bis- (N, N-glycidylaniline), tris- (2,3-epoxypropyl)-1,3,5-triazine-2,4,6-triones, N, N-diethylacetamide, N-methylmaleimide, N, N-diethylurea, 1,3-dimethylethylene urea, 1,3-divinylethyleneurea, 1,3-diethyl-2-imidazolidinone, 1-methyl-3-ethyl-2-imidazolidinone, 4-N, N-dimethylaminoacetophenone, 4-N, N-diethylaminoacetophenone, 1,3-bis (diphenylamino)-2-propanone, and 1,7 -bis(methylethylamino)-4-heptanone.

The modification with the above compound (modifying agent) can be carried out by a known method.

As the SBR, SBR manufactured and sold by Sumitomo Chemical Co., Ltd., ENEOS Materials Co., Ltd., Asahi Kasei Co., Ltd., Zeon Corporation, etc. may be used. The SBR may be used alone or in combination of two or more kinds.

In the rubber composition for cap tread and the rubber composition for base tread, the content of SBR in 100 parts by mass of the rubber component is preferably 20 parts by mass or more, more preferably 25 parts by mass or more, further preferably 30 parts by mass or more, further preferably 35 parts by mass or more, and particularly preferably 40 parts by mass or more. The upper limit is, for example, preferably 80 parts by mass or less, more preferably 55 parts by mass or less, further preferably 50 parts by mass or less, and particularly preferably 45 parts by mass or less.

(γ) BR

The weight average molecular weight of the BR is, for example, more than 100,000 and less than 2,000,000. The vinyl bond amount of the BR is, for example, more than 1 mass% and less than 30 mass%. The cis content of the BR is, for example, more than 1 mass% and 98 mass% or less. The trans content of the BR is, for example, more than 1 mass% and less than 60 mass%. The cis content can be measured by infrared absorption spectroscopy.

The BR is not particularly limited, and can be BR with a high cis content (cis content of 90% or more), BR with a low cis content, BR containing syndiotactic polybutadiene crystals, and the like. The BR can be either unmodified BR or modified BR, and the modified BR can be, for example, BR modified with a compound (modifying agent) represented by the following formula:

[Chemical 2]

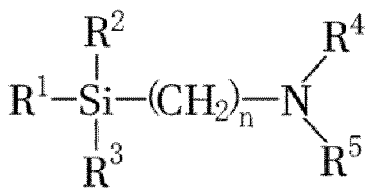

In the formula, $R^1$, $R^2$ and $R^3$ represent, the same or different, alkyl group, alkoxy group, silyloxy group, acetal group, carboxyl group (-COOH), mercapto group (-SH) or derivatives thereof. $R^4$ and $R^5$ represent, the same or differrent, hydrogen atoms or alkyl groups. $R^4$ and $R^5$ may be combined to form a ring structure with nitrogen atoms. n represents an integer.

The modified BR modified with the compound (modifying agent) represented by the above formula may be BR whose polymerization terminal (active terminal) has been modified with the compound represented by the above formula.

As $R^1$, $R^2$ and $R^3$, an alkoxy group is preferable (preferably an alkoxy group having 1 to 8 carbon atoms, more preferably an alkoxy group having 1 to 4 carbon atoms). As $R^4$ and $R^5$, an alkyl group (preferably an alkyl group having 1 to 3 carbon atoms) is preferable. n is preferably 1 to 5, more preferably 2 to 4, and even more preferably 3. Further, when $R^4$ and $R^5$ are bonded to form a ring structure together with a nitrogen atom, a 4- to 8-membered ring is preferable. The alkoxy group also includes a cycloalkoxy group (for example, cyclohexyloxy group) and an aryloxy group (for example, phenoxy group, benzyloxy group).

Specific examples of the modifying agent include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. These may be used alone or in combination of two or more.

Further, as the modified BR, a modified BR modified with the following compound (modifying agent) can also be used. Examples of the modifying agent include

polyglycidyl ethers of polyhydric alcohols such as ethylene glycol diglycidyl ether, glycerin triglycidyl ether, trimethylolethanetriglycidyl ether, and trimethylolpropane triglycidyl ether;
polyglycidyl ethers of aromatic compounds having two or more phenol groups such as diglycidylated bisphenol A;
polyepoxy compounds such as 1,4-diglycidylbenzene, 1,3,5-triglycidylbenzene, and polyepoxidized liquid polybutadiene;
epoxy group-containing tertiary amines such as 4,4' -diglycidyl-diphenylmethylamine, and 4,4'-diglycidyl-dibenzylmethylamine;
diglycidylamino compounds such as diglycidylaniline, N, N'-diglycidyl-4-glycidyloxyaniline, diglycidyl orthotoluidine, tetraglycidylmetaxylenidiamine, tetraglycidylaminodiphenylmethane, tetraglycidyl-p -phenylenediamine, diglycidylaminomethylcyclohexane, and tetraglycidyl-1,3-bisaminomethylcyclohexane;
amino group-containing acid chlorides such as bis- (1-methylpropyl) carbamate chloride, 4-morpholincarbonyl chloride, 1-pyrrolidincarbonyl chloride, N, N-dimethylcarbamide acid chloride, and N, N-diethylcarbamide acid chloride;
epoxy group-containing silane compounds such as 1,3-bis-(glycidyloxypropyl) -tetramethyldisiloxane, and (3-glycidyloxypropyl) - pentamethyldisiloxane;
sulfide group-containing silane compound such as (trimethylsilyl) [3-(trimethoxysilyl) propyl] sulfide, (trimethylsilyl) [3-(triethoxysilyl) propyl] sulfide, (trimethylsilyl) [3- (tripropoxysilyl) propyl] sulfide, (trimethylsilyl) [3- (tributoxysilyl) propyl] sulfide, (trimethylsilyl) [3-(methyldimethoxysilyl) propyl] sulfide, (trimethylsilyl) [3-(methyldiethoxysilyl) propyl] sulfide, (trimethylsilyl) [3-(methyldipropoxysilyl) propyl] sulfide, and (trimethylsilyl) [3-(methyldibutoxysilyl) propyl] sulfide;
N-substituted aziridine compound such as ethyleneimine and propyleneimine;
alkoxysilanes such as methyltriethoxysilane, N, N-bis (trimethylsilyl) -3-aminopropyltrimethoxysilane, N, N-bis (trimethylsilyl) - 3-aminopropyltriethoxysilane, N, N-bis (trimethylsilyl) aminoethyltrimethoxysilane, and N, N-bis (trimethylsilyl) aminoethyltriethoxysilane;
(thio) benzophenone compound having an amino group and/or a substituted amino group such as 4-N, N-dimethylaminobenzophenone, 4-N, N-di-t-butylaminobenzophenone, 4-N, N-diphenylamino benzophenone, 4,4'-bis (dimethylamino) benzophenone, 4,4'-bis (diethylamino) benzophenone, 4,4'-bis (diphenylamino) benzophenone, and N, N, N', N'-bis-(tetraethylamino) benzophenone;
benzaldehyde compounds having an amino group and/or a substituted amino group such as 4-N, N-dimethylaminobenzaldehyde, 4-N, N-diphenylaminobenzaldehyde, and 4-N, N-divinylamino benzaldehyde;

N-substituted pyroridone such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone;
N- substituted piperidone such as methyl-2-piperidone, N-vinyl-2-piperidone, and N-phenyl-2-piperidone;
N-substituted lactams such as N-methyl -ε-caprolactam, N-phenyl-ε-caprolactum, N-methyl-ω-laurilolactum, N-vinyl-ω-laurilolactum, N-methyl-β-propiolactam, and N-phenyl-6-propiolactam; and
N, N-bis- (2,3-epoxypropoxy)-aniline, 4,4-methylene-bis- (N, N-glycidylaniline), tris- (2,3-epoxypropyl)-1,3,5-triazine-2,4,6-triones, N, N-diethylacetamide, N-methylmaleimide, N, N-diethylurea, 1,3-dimethylethylene urea, 1,3-divinylethyleneurea, 1,3-diethyl-2-imidazolidinone, 1-methyl-3-ethyl-2-imidazolidinone, 4-N, N-dimethylaminoacetophenone, 4-N, N-diethylaminoacetophenone, 1,3-bis (diphenylamino)-2-propanone, and 1,7 -bis(methylethylamino)-4-heptanone.

The modification with the above compound (modifying agent) can be carried out by a known method. These modified BRs may be used alone or in combination of two or more.

As the BR, for example, products of Ube Industries, Ltd., ENEOS Materials, Inc., Asahi Kasei Corporation, Zeon Corporation, etc. can be used.

In the rubber composition for cap tread and the rubber composition for base tread, the content of BR in 100 parts by mass of the rubber component is preferably 10 parts by mass or more, more preferably 25 parts by mass or more, and further preferably 30 parts by mass or more, while it is preferably 80 parts by mass or less, more preferably 45 parts by mass or less, and further preferably 40 parts by mass or less.

($\delta$) Other rubber components

The rubber composition may contain, as other rubber components, rubbers (polymers) that are generally used in the manufacture of tires, such as nitrile rubber (NBR), as necessary.

Raw material (monomer) for synthetic rubbers such as, above-mentioned, SBR and BR may be derived from underground resources such as petroleum and natural gas, or may be recycled from rubber products such as tires or non-rubber products such as polystyrene.

Monomers obtained by recycling (recycled monomers) are not particularly limited, and examples thereof include recycled isoprene, recycled butadiene, and recycled aromatic vinyl. Examples of the above-mentioned butadiene include 1,2-butadiene and 1,3-butadiene. Examples of the aromatic vinyl include, but are not particularly limited to, styrene. Among them, it is preferable to use recycle-derived isoprene (recycled isoprene), recycle-derived butadiene (recycled butadiene), and/or recycle-derived styrene (recycled styrene) as raw materials.

The method for producing the recycled monomer is not particularly limited, and examples thereof include synthesis from recycle-derived naphtha obtained by decomposing rubber products such as tires. The method for producing the recycle-derived naphtha is also not particularly limited, and examples thereof include decomposing rubber products such as tires under high temperature and pressure, decomposing with microwaves, or mechanically crushing and then extracting.

Furthermore, the raw materials (monomers) of synthetic rubbers such as IR, SBR, and BR may be derived from biomass. Here, biomass refers to substances derived from natural resources such as plants. Examples of biomass include, but are not limited to, agricultural, forestry, and fishery products, sugar, wood, plant residues after useful components are obtained, plant-derived ethanol, and biomass naphtha. Examples of monomers derived from biomass (biomass monomers) include, but are not limited to, butadiene derived from biomass and aromatic vinyl derived from biomass. Examples of butadiene include 1,2-butadiene and 1,3-butadiene. Examples of aromatic vinyl include, but are not limited to, styrene. In addition, the method for producing biomass monomers is not particularly limited, and examples include biological and/or chemical and/or physical conversion of animals and plants. A representative example of biological conversion is fermentation by microorganisms, and examples of chemical and/or physical conversion include those using catalysts, those using high heat, those using high pressure, those using electromagnetic waves, those using critical liquids, and combinations thereof.

The polymer synthesized from a biomass monomer component (biomass polymer) is not particularly limited, and examples thereof include polybutadiene rubber synthesized from butadiene derived from biomass, aromatic vinyl/butadiene copolymer synthesized from butadiene derived from biomass and/or aromatic vinyl derived from biomass, etc. Examples of the aromatic vinyl/butadiene copolymer include styrene butadiene rubber synthesized from butadiene derived from biomass and/or styrene derived from biomass.

Whether the raw material of a polymer is derived from biomass can be determined by the percent modern carbon (pMC) measured in accordance with ASTM D6866-10.

The pMC is a ratio of the $^{14}C$ concentration of a sample to the $^{14}C$ concentration of a modern standard reference, and this value is used as an index of the biomass ratio of a compound (rubber). The significance of this value will be described below.

In one mole of carbon atoms ($6.02 \times 10^{23}$), there are about $6.02 \times 10^{11}$ $^{14}C$, which is about one trillionth of the number of normal carbon atoms. $^{14}C$ is called a radioisotope, and its half-life is 5730 years, and it decreases regularly. It takes 226,000 years for all of them to decay. Therefore, in fossil fuels such as coal, oil, and natural gas, which are thought to have passed more than 226,000 years after carbon dioxide in the atmosphere was absorbed and fixed to plants and other things, all of the $^{14}C$ elements that were contained in them at the time of fixation have decayed. Therefore, in the present 21st century, fossil fuels such as coal, oil, and natural gas do not contain any $^{14}C$ elements at all. Therefore, chemical substances produced using these fossil fuels as raw materials do not contain any $^{14}C$ elements at all.

On the other hand, $^{14}C$ is constantly produced as a result of nuclear reactions caused by cosmic rays in the atmosphere, and the amount of $^{14}C$ in the atmospheric environment on Earth is constant, balancing with the decrease due to radioactive decay. Therefore, the $^{14}C$ concentration of materials derived from biomass resources circulating in the current environment is approximately $1 \times 10^{-12}$mo1% relative to the total C atoms, as mentioned above. Therefore, the biomass ratio in a certain compound can be calculated using the difference between these values.

This $^{14}C$ is generally measured as follows. Accelerator mass spectrometry based on a tandem accelerator is used to measure the $^{13}C$ concentration ($^{13}C/^{12}C$) and the $^{14}C$ concentration ($^{14}C/^{12}C$). In the measurement, the $^{14}C$ concentration in circulating carbon in nature as of 1950 is adopted as the modern standard reference for the $^{14}C$ concentration. As a specific standard substance, an oxalic acid standard provided by NIST (National Institute of Standards and Technology) is used. The specific radioactivity of carbon (radioactivity of $^{14}C$ per gram of carbon) in this oxalic acid is separated for each carbon isotope, and $^{13}C$ is corrected to a constant value, and the value corrected for decay from 1950 to the date of measurement is used as the standard $^{14}C$ concentration value (100%). The ratio of this value to the value of the actually measured sample is the pMC value.

Therefore, if rubber is made from 100% biomass (natural) derived materials, it will show a value of about 110 pMC, as it is often not 100 under normal conditions, although there are regional differences. On the other hand, when the $^{14}C$ concentration is measured for chemical substances derived from fossil fuels such as petroleum, it will show a value of about 0 pMC (for example, 0.3 pMC). This value corresponds to the biomass ratio of 0% mentioned above.

For the above reasons, it is preferable from the standpoint of environmental protection (sustainability) to use a material such as rubber having a high pMC value, that is, a material such as rubber having a high biomass ratio, in a rubber composition.

(b) Compounding materials other than rubber components

($\alpha$) Vulcanized rubber powder

As described above, in the present invention, the rubber composition for the cap tread and the rubber composition for the base tread contain vulcanized rubber powder.

The vulcanized rubber powder is a particle made of vulcanized rubber, and specifically, rubber powder as specified in JIS K 6316:2017, and the like can be used. From the viewpoint of environmental consideration and cost, recycled rubber powder produced from crushed waste tires is preferable. These may be used alone or in combination of two or more kinds.

The vulcanized rubber powder is not particularly limited, and may be either unmodified vulcanized rubber powder or modified vulcanized rubber powder.

Vulcanized rubber powder is produced by crushing used tires using a roller mill, grinder, etc. Examples of crushing methods include mechanical crushing using a mill, freeze crushing in which chips are frozen with liquid nitrogen and then mechanically crushed, and hydraulic crushing in which chips are crushed using high-pressure water (water jet). Among these, vulcanized rubber powder produced by hydraulic crushing is preferred because it has superior tensile strength and abrasion resistance compared to mechanically crushed products and freeze crushed products of the same particle size.

That is, freeze crushing and mechanical crushing are mechanically crushed, so there is no selectivity in the cutting site and the chemical bonds are physically broken, whereas hydraulic crushing is crushed using water, so the chemical bonds are not physically broken. As a result, the vulcanized rubber powder obtained by hydraulic crushing has many irregularities on the surface compared to the vulcanized rubber powder obtained by mechanical crushing and freeze crushing, and the specific surface area is increased, so that it is thought that the powder gets caught with the matrix rubber and the reinforcement during deformation is improved. In addition, it is thought that the increase in specific surface area exposes many reactive double bonds on the surface, increases the iodine value, and increases the surface reactivity, so that the vulcanized rubber powder and the matrix rubber are chemically bonded.

Furthermore, vulcanized rubber powder can reduce the consumption of petroleum-derived materials, making it a desirable sustainable material that can adapt to the growing interest in environmental protection in recent years.

The content of the vulcanized rubber powder relative to 100 parts by mass of the rubber component is, for example, preferably 1 part by mass or more, more preferably 3 parts by mass or more, further preferably 5 parts by mass or

more, and particularly preferably 10 parts by mass or more. The upper limit is, for example, preferably 70 parts by mass or less, more preferably 50 parts by mass or less, further preferably 20 parts by mass or less, and particularly preferably 15 parts by mass or less.

As commercially available vulcanized rubber particles, for example, products from Lehigh Co., Ltd., Muraoka Rubber Industries Co., Ltd., etc. can be used.

($\beta$) Filler

In the present invention, the rubber composition preferably contains a filler. Specific examples of the filler include carbon black, silica, graphite, calcium carbonate, talc, alumina, clay, aluminum hydroxide, and mica. Among these, it is preferable to contain carbon black, and if necessary, silica may be further contained. When using silica, it is preferable to use it in combination with a silane coupling agent.

The amount of the filler is preferably 40 parts by mass or more, more preferably 50 parts by mass or more, and further preferably 60 parts by mass or more, relative to 100 parts by mass of the rubber component. The upper limit is, for example, preferably 100 parts by mass or less, more preferably 90 parts by mass or less, and further preferably 80 parts by mass or less.

(i) Carbon black

Carbon black is preferably used for the purpose of improving the crack growth resistance, durability, resistance to deterioration due to ultraviolet light, and the like of the tire.

From the viewpoint of reinforcing the rubber, the nitrogen adsorption specific surface area ($N_2$ SA) of the carbon black is, for example, preferably 30 $m^2$ /g or more, more preferably 50 $m^2$ /g or more, and further preferably 60 $m^2$ /g or more. On the other hand, from the viewpoint of heat generation, it is preferably 250 $m^2$/g or less, more preferably 150 $m^2$/g or less, and further preferably 120 $m^2$ /g or less. The nitrogen adsorption specific surface area of the carbon black is measured in accordance with ASTM D4820-93.

From the viewpoint of rubber rigidity, the dibutyl phthalate (DBP) absorption of carbon black is, for example, preferably 50 ml/100 g or more, and more preferably 100 ml/100 g or more. On the other hand, from the viewpoint of rubber deformation followability, it is preferably 250 ml/100 g or less, and more preferably 150 ml/100 g or less. The DBP absorption of carbon black is measured according to ASTM D2414-93.

The carbon black is not particularly limited, and examples thereof include furnace blacks (furnace carbon blacks) such as SAF, ISAF, HAF, MAF, FEF, SRF, GPF, APF, FF, CF, SCF, and ECF; acetylene blacks (acetylene carbon blacks); thermal blacks (thermal carbon blacks) such as FT and MT; and channel blacks (channel carbon blacks) such as EPC, MPC, and CC. Examples of product numbers include N134, N110, N220, N234, N219, N339, N330, N326, N351, N550, and N762. These may be used alone or in combination of two or more.

The raw material for carbon black may be, in addition to mineral oil, a biomass material such as lignin or vegetable oil, or a pyrolysis oil obtained by pyrolyzing a rubber product containing carbon black, such as waste tires (recycled carbon black).

The carbon black may be produced by combustion, such as in a furnace process, by hydrothermal carbonization (HTC), or by pyrolysis of methane, such as in a thermal black process.

As commercially available products, products available from Asahi Carbon Co., Ltd., Cabot Japan Co., Ltd., Tokai Carbon Co., Ltd., Mitsubishi Chemical Co., Ltd., Lion Corporation, Nippon Steel Carbon Co., Ltd., Columbia Carbon Co., Ltd., etc. may be used. These products may be used alone or in combination of two or more kinds.

Content of carbon black relative to 100 parts by mass of the rubber component is preferably 30 parts by mass or more, more preferably 40 parts by mass or more, further preferably 50 parts by mass or more, and particularly preferably 56 parts by mass or more. The upper limit is not particularly limited, but is, for example, preferably 75 parts by mass or less, more preferably 70 parts by mass or less, and further preferably 65 parts by mass or less.

(ii) Silica

In the present invention, the rubber composition preferably contains silica as necessary. From the viewpoint of obtaining good durability performance, the BET specific surface area of silica is preferably more than 100 $m^2$/g, more preferably more than 130 $m^2$/g. On the other hand, it is preferably less than 250 $m^2$/g, and more preferably less than 200 $m^2$/g. The above-mentioned BET specific surface area is the value of $N_2$ SA measured by the BET method in accordance with ASTM D3037-93 .

The silica is not particularly limited, and for example, silica prepared by a dry method (anhydrous silica) or silica prepared by a wet method (hydrated silica) that is commonly used in the tire industry can be used. Commercially available products include products from Evonik Industries Co., Ltd., Rhodia Co., Ltd., Tosoh Silica Co., Ltd., Solvay Japan Co., Ltd.,

Tokuyama Co., Ltd., etc.

The raw material of silica is not particularly limited, and may be, for example, a mineral-derived raw material such as quartz, a biological raw material such as rice husk (for example, silica made from biomass materials such as rice husk), or silica recycled from a product containing silica. Among them, hydrated silica prepared by a wet method is preferred because it contains large number of silanol groups.

Silica made from biomass materials can be obtained, for example, by extracting silicate from rice husk ash obtained by burning rice husks using a sodium hydroxide solution, and then reacting the silicate with sulfuric acid according to the same manner as conventional wet-process silica to produce a silicon dioxide precipitate, which is then filtered, washed with water, dried, and pulverized.

The silica recycled from a product containing silica can be, for example, silica recovered from a product containing silica, such as electronic parts such as semiconductors, tires, desiccants, and filtering materials such as diatomaceous earth. The recovery method is not particularly limited, and examples include pyrolysis and decomposition by electromagnetic waves. Among them, silica recovered from electronic parts such as semiconductors or tires is preferred.

When silica crystallizes, it does not dissolve in water and its component silicic acid cannot be used. By controlling the combustion temperature and combustion time, it is possible to suppress the crystallization of silica in rice husk ash (see JP 2009-2594 A, Akita Prefectural University Web Journal B/2019, vol. 6, pp. 216-222, etc.).

As the amorphous silica extracted from rice husks, commercially available products from Wilmar Corporation and the like can be used.

These silicas may be used alone or in combination of two or more. The use of biomass silica or recycled silica is preferable from the viewpoint of environmental protection (sustainability).

The content of silica per 100 parts by mass of the rubber component is preferably 5 parts by mass or more, more preferably 25 parts by mass or more, and further preferably 45 parts by mass or more, relative to 100 parts by mass of the rubber component. The upper limit is not particularly limited, but is preferably 115 parts by mass or less, more preferably 85 parts by mass or less, and further preferably 65 parts by mass or less.

(iii) Silane coupling agent

When silica is used, it is preferable to use a silane coupling agent in combination. The silane coupling agent is not particularly limited. Examples of the silane coupling agent include

sulfide-based ones such as bis(3-triethoxysilylpropyl)tetrasulfide, bis (2-triethoxysilylethyl)tetrasulfide, bis (4-triethoxysilylbutyl)tetrasulfide, bis(3-trimethoxysilylpropyl) tetrasulfide, bis(2-trimethoxysilylethyl) tetrasulfide, bis(2 -triethoxysilylethyl)trisulfide, bis(4-trimethoxysilylbutyl) trisulfide, bis(3-triethoxysilylpropyl)disulfide, bis(2-triethoxysilylethyl) disulfide, bis(4-triethoxysilylbutyl)disulfide, bis(3-trimethoxysilylpropyl) disulfide, bis(2-trimethoxysilylethyl)disulfide, bis(4-trimethoxysilylbutyl)disulfide, 3-trimethoxysilylpropyl- N, N-dimethylthiocarbamoyltetrasulfide, 2-triethoxysilylethyl-N, N-dimethylthiocarbamoyltetrasulfide, and 3-triethoxysilylpropylmethacrylatemonosulfide;
mercapto-based ones such as 3-mercaptopropyltrimethoxysilane, 2-mercaptoethyltriethoxysilane, and NXT and NXT-Z manufactured by Momentive;
vinyl-based ones such as vinyl triethoxysilane, and vinyl trimethoxysilane;
amino-based ones such as 3-aminopropyltriethoxysilane and 3-aminopropyltrimethoxysilane;
glycidoxy-based ones such as $\gamma$-glycidoxypropyltriethoxysilane and $\gamma$-glycidoxypropyltrimethoxysilane;
nitro-based ones such as 3-nitropropyltrimethoxysilane, and 3-nitropropyltriethoxysilane; and
chloro-based ones such as 3-chloropropyltrimethoxysilane and 3-chloropropyltriethoxysilane. These may be used alone or in combination of two or more.

As the silane coupling agent, for example, products of Evonik Industries, Momentive Co., Ltd., Shin-Etsu Silicone Co., Ltd., Tokyo Chemical Industry Co., Ltd., Azumax Co., Ltd., Dow Corning Toray Co., Ltd., etc. can be used.

The content of the silane coupling agent relative to 100 parts by mass of silica is, for example, more than 3 parts by mass and less than 15 parts by mass.

(iv) Other fillers

In addition to the above-mentioned carbon black and silica, the rubber composition may further contain, as necessary, fillers commonly used in the tire industry, such as graphite, calcium carbonate, talc, alumina, clay, aluminum hydroxide, mica, etc. The content of these fillers is, for example, more than 0.1 part by mass and less than 200 parts by mass relative to 100 parts by mass of the rubber component.

(γ) Softener components

In consideration of proper dispersion of powder materials during kneading, it is preferable to use a softener component in the rubber composition as necessary. Note that the softener component here refers to a material that imparts plasticity to the rubber component, and is a concept that includes both softeners that are liquid at 25°C and softeners that are solid at 25°C.

Examples of softeners include resin components, oils, liquid polymers, and ester-based plasticizers. These softeners may be derived from mineral resources such as petroleum and natural gas, may be derived from biomass, or may be derived from naphtha recycled from rubber products or non-rubber products. Low molecular weight hydrocarbon components obtained by pyrolysis and extraction of used tires or products containing various components may also be used as softeners. Among these, softeners derived from biomass or recycled materials are preferred as sustainable softeners.

These softeners may be used alone or in combination of two or more. The content of the plasticizer component relative to 100 parts by mass of the rubber component is preferably 50 parts by mass or less, more preferably 25 parts by mass or less, further preferably 20 parts by mass or less, and particularly preferably 15 parts by mass or less. The lower limit is, for example, preferably 1 part by mass or more, more preferably 3 parts by mass or more, further preferably 7 parts by mass or more, further preferably 10 parts by mass or more, and particularly preferably 12 parts by mass or more. The content of the plasticizer component also includes the amount of oil contained in the rubber (oil-extended rubber) and the like.

(i) Oil

Examples of the oil include mineral oil, vegetable oil, animal oil, etc. From the viewpoint of life cycle assessment, waste oil after use in rubber mixers or engines, or refined waste cooking oil used in restaurants may also be used.

(i-1) Mineral oil

Mineral oil refers to oil derived from mineral resources such as petroleum and natural gas. Examples of mineral oil include paraffinic oil (mineral oil), naphthenic oil, and aromatic oil.

Specific examples of mineral oils include, for example, Mild Extract Solvated (MES), Distillate Aromatic Extract (DAE), Treated Distillate Aromatic Extract (TDAE), Treated Residual Aromatic Extract (TRAE), and Residual Aromatic Extract (RAE).

In addition, to be environmentally friendly, oils with low polycyclic aromatic compound (PCA) content may be used, such as MES, TDAE, and heavy naphthenic oils.

Examples of commercially available mineral oils include paraffinic, aromatic, and naphthenic oils, and can be products of, for example, Idemitsu Kosan Co., Ltd., Sankyo Yuka Kogyo Co., Ltd., ENEOS Corporation, Orisoi Corporation, H&R Corporation, Toyokuni Oil Co., Ltd., Showa Shell Sekiyu Co., Ltd., and Fuji Kosan Co., Ltd. These may be used alone or in combination of two or more kinds.

(i-2) Vegetable oil

Examples of vegetable oils include linseed oil, rapeseed oil, safflower oil, soybean oil, corn oil, cottonseed oil, rice bran oil, tall oil, sesame oil, perilla oil, castor oil, tung oil, pine oil, pine tar oil, sunflower oil, and coconut oil, palm oil, palm kernel oil, olive oil, camellia oil, jojoba oil, macadamia nut oil, peanut oil, grapeseed oil, and wood wax.

Furthermore, vegetable oils also include refined oils (salad oil, etc.) obtained by refining each of the above oils, transesterified oils obtained by transesterification, hydrogenated oils, thermopolymerized oils obtained by thermal polymerization, oxidized polymerized oils obtained by oxidation, waste cooking oils that have been recovered from edible oils, and the like. Note that the vegetable oil may be liquid or solid at room temperature (25°C). These may be used alone or in combination of two or more.

The vegetable oil preferably contains acylglycerol, and more preferably contains triacylglycerol . Incidentally, acylglycerol refers to a compound in which a hydroxyl group of glycerin and a fatty acid are ester-bonded. The acylglycerol is not particularly limited, and may be 1-monoacylglycerol, 2-monoacylglycerol, 1,2-diacylglycerol, 1,3-diacylglycerol, or triacylglycerol. Furthermore, the acylglycerol may be a monomer, a dimer, or a polymer of trimer or more. Incidentally, dimer or more acylglycerols can be obtained by thermal polymerization, oxidative polymerization, or the like. Furthermore, the acylglycerol may be liquid or solid at room temperature (25°C).

The method for confirming whether or not the rubber composition contains acylglycerol is not particularly limited, but can be confirmed by $^1$H-NMR measurement. For example, a rubber composition containing triacylglycerol is immersed in deuterated chloroform at room temperature (25°C) for 24 hours, the rubber composition is removed, and then $^1$H-NMR is

measured at room temperature. When the signal of tetramethylsilane (TMS) is set to 0.00 ppm, signals are observed around 5.26 ppm, around 4.28 ppm, and around 4.15 ppm. These signals are presumed to be signals derived from hydrogen atoms bonded to carbon atoms adjacent to the oxygen atoms of the ester groups, and therefore the inclusion of acylglycerol can be confirmed. Here, "around" refers to a range of ±0.10 ppm.

The fatty acid is not particularly limited, and may be either an unsaturated fatty acid or a saturated fatty acid. Examples of the unsaturated fatty acid include monounsaturated fatty acids such as oleic acid, and polyunsaturated fatty acids such as linoleic acid and linolenic acid. Examples of the saturated fatty acid include butyric acid and lauric acid.

Among them, the fatty acid is preferably a fatty acid with few double bonds, i.e., a saturated fatty acid or a monounsaturated fatty acid, and oleic acid is preferred. As the vegetable oil containing such a fatty acid, for example, a vegetable oil containing a saturated fatty acid or a monounsaturated fatty acid may be used, or a vegetable oil modified by ester exchange or the like may be used. In addition, in order to produce a vegetable oil containing such a fatty acid, a plant may be improved by breeding, genetic recombination, genome editing, or the like.

As the vegetable oil, for example, commercially available oils from Idemitsu Kosan Co., Ltd., Sankyo Yuka Kogyo Co., Ltd., ENEOS Corporation, Orisoi Corporation, H&R Corporation, Toyokuni Oil Co., Ltd., Fuji Kosan Co., Ltd., Nisshin Oillio Group Co., Ltd., etc. can be used.

(ii) Liquid rubber

Liquid rubber is a polymer that is in a liquid state at room temperature (25°C) and is a rubber component that can be extracted by acetone extraction from a vulcanized tire. Examples of liquid rubber include farnesene-based polymers, liquid diene-based polymers, and hydrogenated products thereof.

Farnesene-based polymers are polymers obtained by polymerizing farnesene and contain structural units based on farnesene. Farnesene has isomers such as α-farnesene ((3E,7E)-3,7,11-trimethyl-1,3,6,10-dodecatetraene) and β-farnesene (7,11-dimethyl-3-methylene-1,6,10-dodecatriene).

The farnesene-based polymer may be a homopolymer of farnesene (farnesene homopolymer) or a copolymer of farnesene and a vinyl monomer (farnesene-vinyl monomer copolymer).

Examples of the liquid diene polymer include liquid styrene-butadiene copolymer (liquid SBR), liquid butadiene polymer (liquid BR), liquid isoprene polymer (liquid IR), and liquid styrene-isoprene copolymer (liquid SIR).

The liquid diene polymer has a weight average molecular weight (Mw) in terms of polystyrene measured by gel permeation chromatography (GPC) of, for example, more than $1.0 \times 10^3$ and less than $2.0 \times 10^5$. Here, the Mw of the liquid diene polymer is a value in terms of polystyrene measured by gel permeation chromatography (GPC).

As the liquid rubber, for example, products of Kuraray Co., Ltd., Cray Valley Co., Ltd., etc. can be used.

(iii) Resin component

The resin component also functions as a tackifier, and may be solid or liquid at room temperature. Specific examples of the resin component include rosin-based resins, styrene-based resins, coumarone resins, terpene resins, C5 resins, C9 resins, C5C9 resins, and acrylic resins, and two or more of these may be used in combination. These resin components may be provided with a modified group capable of reacting with silica, etc., as necessary.

Rosin-based resins are resins whose main component is rosin acid obtained by processing pine resin. These rosin-based resins (rosins) can be classified according to whether they are modified or not, and can be classified into unmodified rosin (unmodified rosin) and modified rosin (rosin derivatives). Examples of unmodified rosin include tall rosin (also known as tall oil rosin), gum rosin, wood rosin, disproportionated rosin, polymerized rosin, hydrogenated rosin, and other chemically modified rosins. Modified rosin is a modification of unmodified rosin, and examples of such modified rosin include rosin esters, unsaturated carboxylic acid modified rosins, unsaturated carboxylic acid modified rosin esters, rosin amide compounds, and rosin amine salts.

The styrene-based resin is a polymer using a styrene-based monomer as a constituent monomer, and examples thereof include polymers polymerized with a styrene-based monomer as the most abundant constituent monomer. Specific examples thereof include homopolymers obtained by polymerizing each of styrene-based monomers (styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene, etc.) alone, copolymers obtained by copolymerizing two or more kinds of styrene-based monomers, and copolymers of a styrene-based monomer and another monomer that can be copolymerized therewith.

Examples of the other monomer include acrylonitriles such as acrylonitrile and methacrylonitrile, unsaturated carboxylic acids such as acrylics acid and methacrylic acid, unsaturated carboxylic acid esters such as methyl acrylate and methyl methacrylate, dienes such as chloroprene and butadiene-isoprene, olefins such as 1-butene and 1-pentene, and α,β-unsaturated carboxylic acids or acid anhydrides such as maleic anhydride.

Among the coumarone resins, coumarone-indene resins are preferred. Coumarone-indene resins are resins

that contain coumarone and indene as monomer components that constitute the resin skeleton (main chain). Other monomer components contained in the skeleton besides coumarone and indene include styrene, α-methylstyrene, methylindene, vinyltoluene, etc.

The hydroxyl value (OH value) of the coumarone-indene resin is, for example, more than 15 mgKOH/g and less than 150 mgKOH/g. The OH value is the amount of potassium hydroxide required to neutralize acetic acid bonded to hydroxyl groups when acetylating 1 g of the resin, expressed in milligrams, and is a value measured by potentiometric titration (JIS K 0070:1992).

The softening point of the coumarone-indene resin is, for example, higher than 30°C and lower than 160°C. The softening point is the temperature when the ball drops when the softening point specified in JIS K 6220-1:2001 is measured using a ring and ball softening point tester.

Examples of terpene resins include polyterpene, terpene phenol, and aromatic modified terpene resin. Polyterpene is a resin obtained by polymerizing a terpene compound and a hydrogenated product thereof. Terpene compounds are hydrocarbons represented by the composition $(C_5H_8)_n$ and their oxygen-containing derivatives, and are compounds having a basic skeleton of a terpene classified into monoterpene ($C_{10}H_{16}$), sesquiterpene ($C_{15}H_{24}$), diterpene ($C_{20}H_{32}$), etc. Examples of such compounds include α-pinene, β-pinene, dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol.

Examples of the polyterpene include terpene resins such as α-pinene resin, β-pinene resin, limonene resin, dipentene resin, and β-pinene/limonene resin, which are made from the above-mentioned terpene compound, as well as hydrogenated terpene resin obtained by hydrogenating the terpene resin. Examples of the terpene phenol include a resin obtained by copolymerizing the above-mentioned terpene compound and the phenol compound, and a resin obtained by hydrogenating above-mentioned resin. Specifically, a resin obtained by condensing the above-mentioned terpene compound, the phenol compound and formalin can be mentioned. Examples of the phenol compound include phenol, bisphenol A, cresol, and xylenol. Examples of the aromatic-modified terpene resin include a resin obtained by modifying a terpene resin with an aromatic compound, and a resin obtained by hydrogenating the above-mentioned resin. The aromatic compound is not particularly limited as long as it is a compound having an aromatic ring, and examples thereof include phenol compounds such as phenol, alkylphenol, alkoxyphenol, and unsaturated hydrocarbon group-containing phenol; naphthol compounds such as naphthol, alkylnaphthol, alkoxynaphthol, and unsaturated hydrocarbon group-containing naphthols; styrene derivatives such as styrene, alkylstyrene, alkoxystyrene, unsaturated hydrocarbon group-containing styrene; coumarone; and indene.

The C5 resin refers to a resin obtained by polymerizing a C5 fraction. Examples of the C5 fraction include petroleum fractions having 4 to 5 carbon atoms such as cyclopentadiene, pentene, pentadiene, and isoprene. As the C5-based petroleum resin, a dicyclopentadiene resin (DCPD resin) is preferably used.

The C9 resin refers to a resin obtained by polymerizing a C9 fraction, and may be hydrogenated or modified. Examples of the C9 fraction include petroleum fractions having 8 to 10 carbon atoms such as vinyltoluene, alkylstyrene, indene, and methyl indene. As the specific examples, a coumarone-indene resin, a coumarone resin, an indene resin, and an aromatic vinyl resin are preferably used. As the aromatic vinyl resin, a homopolymer of α-methylstyrene or styrene or a copolymer of a-methylstyrene and styrene is preferable because it is economical, easy to process, and excellent in heat generation. A copolymer of α-methylstyrene and styrene is more preferred. As the aromatic vinyl-based resin, for example, those commercially available from Clayton, Eastman Chemical, etc. can be used.

The C5C9 resin refers to a resin obtained by copolymerizing the C5 fraction and the C9 fraction, and may be hydrogenated or modified. Examples of the C5 fraction and the C9 fraction include the above-mentioned petroleum fraction. As the C5C9 resin, for example, those commercially available from Tosoh Corporation, LUHUA, etc. can be used.

The acrylic resin is not particularly limited, but for example, a solvent-free acrylic resin can be used.

As the solvent-free acrylic resin, a (meth) acrylic resin (polymer) synthesized by a high-temperature continuous polymerization method (high-temperature continuous lump polymerization method (a method described in US 4414370 B, JP 84-6207 A, JP 93-58805 B, JP 89-313522 A, US 5010166 B, Toa Synthetic Research Annual Report TREND2000 No. 3 p42-45, and the like) without using polymerization initiators, chain transfer agents, organic solvents, etc. as auxiliary raw materials as much as possible, can be mentioned. In the present disclosure, (meth) acrylic means methacrylic and acrylic.

Examples of the monomer component constituting the acrylic resin include (meth) acrylic acid, and (meth) acrylic acid derivatives such as (meth) acrylic acid ester (alkyl ester, aryl ester, aralkyl ester, etc.), (meth) acrylamide, and (meth) acrylamide derivative.

In addition, as the monomer component constituting the acrylic resin, aromatic vinyl compounds such as styrene, α-methylstyrene, vinyltoluene, vinylnaphthalene, divinylbenzene, trivinylbenzene, divinylnaphthalene, and the like may be used, together with (meth) acrylic acid or (meth) acrylic acid derivative.

The acrylic resin may be a resin composed of only a (meth) acrylic component or a resin also having a component other than the (meth) acrylic component. Further, the acrylic resin may have a hydroxyl group, a carboxyl group, a silanol group, or the like.

Examples of the resin component that can be used include products from Maruzen Petrochemical Co., Ltd., Sumitomo Bakelite Co., Ltd., Yasuhara Chemical Co., Ltd., Tosoh Corporation, Rutgers Chemicals Co., Ltd., BASF Co., Ltd., Clayton Co., Ltd., Nippon Paint Chemical Co., Ltd., Nippon Shokubai Co., Ltd., ENEOS Corporation, Arakawa Chemical Industries, Ltd., and Taoka Chemical Co., Ltd.

(δ) Wax

The rubber composition may contain a wax. Content of the wax is, for example, preferably 0.7 to 20 parts by mass, more preferably 1.0 to 15 parts by mass, and further preferably 1.3 to 10 parts by mass, relative to 100 parts by mass of the rubber component.

The wax is not particularly limited, and any wax commonly used in the tire industry can be suitably used. Examples include mineral waxes and plant-derived waxes. The mineral wax refers to wax derived from mineral resources such as oil and natural gas. The plant-derived wax refers to wax derived from natural resources such as plants. Among them, the mineral wax is preferred.

Examples of the wax derived from plants include rice wax, carnauba wax, and candelilla wax. Examples of the mineral wax include paraffin wax, microcrystalline wax, and selected special waxes thereof, and paraffin wax is preferred. In the present invention, the wax does not contain stearic acid.

As the wax, for example, commercially available waxes from Ouchi Shinko Chemical Industry Co., Ltd., Nippon Seiro Co., Ltd., Paramelt Co., Ltd., etc. may be used. These waxes may be used alone or in combination of two or more kinds.

(ε) Anti-aging agents

The rubber composition may contain an antioxidant. Content of the antioxidant is, for example, preferably more than 1 part by mass and less than 10 parts by mass, and more preferably 3 parts by mass, relative to 100 parts by mass of the rubber component.

The antiaging agent is not particularly limited, and examples thereof include naphthylamine-based antiaging agents such as phenyl-α-naphthylamine; diphenylamine-based antiaging agents such as octylated diphenylamine and 4,4'-bis(a,a'-dimethylbenzyl)diphenylamine; p-phenylenediamine-based antioxidants such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), and N,N'-di-2-naphthyl-p-phenylenediamine (DNPD); quinoline-based antioxidants such as 2,2,4-trimethyl-1,2-dihydroquinoline polymers; monophenol-based antioxidants such as 2,6-di-t-butyl-4-methylphenol and styrenated phenol; and bis-, tris-, and polyphenol-based antioxidants such as tetrakis-[methylene-3-(3',5'-di-t-butyl-4'-hydroxyphenyl)propionate]methane. Among these, p-phenylenediamine-based antioxidants and quinoline-based antioxidants are preferred, and N-(1,3-dimethylbutyl)-N'-phenyl-p-phenylenediamine and 2,2,4-trimethyl-1,2-dihydroquinoline polymers are more preferred. These may be used alone or in combination of two or more kinds.

As commercially available products, for example, products from Seiko Chemical Co., Ltd., Sumitomo Chemical Co., Ltd., Ouchi Shinko Chemical Co., Ltd., Flexsys Co., Ltd., etc. can be used.

(ζ) Lubricant (stearic acid)

The rubber composition may contain a lubricant. As the lubricant, a lubricant based on a fatty acid derivative such as stearic acid can be preferably used. As the stearic acid, a conventionally known one can be used. Specifically, for example, a product of NOF Corporation, Kao Corporation, Fujifilm Wako Pure Chemical Industries, Ltd., Chiba Fatty Acid Co., Ltd., etc. can be used. In addition, Struktol WB16 manufactured by Struktol Co., Ltd. can also be used.

Content of stearic acid relative to 100 parts by mass of the rubber component is, for example, preferably more than 0.5 parts by mass and less than 10.0 parts by mass, and more preferably 2.0 parts by mass or more and 4.0 parts by mass or less.

(η) Zinc oxide

The rubber composition may contain zinc oxide. Content of zinc oxide is, for example, preferably more than 0.5 parts by mass and less than 10 parts by mass, and more preferably 2 parts by mass or more and 3 parts by mass or less, relative to 100 parts by mass of the rubber component. As the zinc oxide, a conventionally known product can be used, and for example, products of Mitsui Mining & Smelting Co., Ltd., Toho Zinc Co., Ltd., Hakusui Tech Co., Ltd., Seido Chemical Industry Co., Ltd., Sakai Chemical Industry Co., Ltd., etc. can be used.

(θ) Crosslinking agents and vulcanization accelerators

The rubber composition preferably contains a crosslinking agent such as sulfur. Content of the crosslinking agent is, for example, preferably more than 0.1 parts by mass and less than 10.0 parts by mass, and more preferably 1.6 parts by mass or more and 2.5 parts by mass or less, relative to 100 parts by mass of the rubber component. The sulfur content is the pure sulfur content, and in the case of using insoluble sulfur, it is the content excluding the oil content.

Examples of sulfur include powdered sulfur, precipitated sulfur, colloidal sulfur, insoluble sulfur, highly dispersible sulfur, and soluble sulfur, which are generally used in the rubber industry. These may be used alone or in combination of two or more kinds.

As the sulfur, for example, products available from Tsurumi Chemical Industry Co., Ltd., Karuizawa Sulfur Co., Ltd., Shikoku Chemical Industry Co., Ltd., Flexsys Co., Ltd., Nippon Kanryu Kogyo Co., Ltd., Hosoi Chemical Industry Co., Ltd., etc. can be used.

Crosslinking agents other than sulfur may be used. Specifically, for example, vulcanizing agents containing sulfur atoms such as TACKIROL V200 manufactured by Taoka Chemical Co., Ltd., DURALINK HTS (sodium 1,6-hexamethylene-dithiosulfate dihydrate) manufactured by Flexsys Co., Ltd., and KA9188 (1,6-bis(N,N'-dibenzylthiocarbamoyldithio) hexane: hybrid crosslinking agent) manufactured by LANXESS Co., Ltd., and organic peroxides such as dicumyl peroxide can be used.

The rubber composition preferably contains a vulcanization accelerator. Content of the vulcanization accelerator is, for example, preferably more than 0.3 parts by mass and less than 10.0 parts by mass, and more preferably 0.7 parts by mass or more and 2.0 parts by mass or less, relative to 100 parts by mass of the rubber component.

Examples of the vulcanization accelerator include thiazole-based vulcanization accelerators such as 2-mercaptobenzothiazole, di-2-benzothiazolyl disulfide, and N-cyclohexyl-2-benzothiazyl sulfenamide; thiuram-based vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide-based vulcanization accelerators such as N-cyclohexyl-2-benzothiazole sulfenamide, N-t-butyl-2-benzothiazolyl sulfenamide, N-oxyethylene-2-benzothiazole sulfenamide, N-oxyethylene-2-benzothiazole sulfenamide, and N,N'-diisopropyl-2-benzothiazole sulfenamide; and guanidine-based vulcanization accelerators such as diphenyl guanidine, di-orthotolyl guanidine, and orthotolyl biguanidine. These may be used alone or in combination of two or more.

(ι) Other

In addition to the above-mentioned components, the rubber composition may contain additives commonly used in the tire industry, such as organic fillers such as cellulose fibers, organic peroxides, and the like, as required. Content of these additives is, for example, more than 0.1 parts by mass and less than 50 parts by mass relative to 100 parts by mass of the rubber component.

In the present invention, among the above-mentioned materials, various materials containing carbon atoms (for example, rubber, oil, resin, vulcanization accelerator, antioxidant, surfactant, etc.) may be derived from carbon dioxide in the atmosphere. As a method for obtaining the compounding material of the present invention from carbon dioxide, carbon dioxide may be directly converted, or methane obtained through a methanation process for synthesizing methane from carbon dioxide may be converted.

(2) Preparation of rubber composition

The rubber composition for the cap tread and the rubber composition for the base tread can be produced by a general method, for example, a manufacturing method including a base kneading step of kneading a rubber component with a filler such as carbon black, and a finish kneading step of kneading the kneaded product obtained in the base kneading step and a cross-linking agent.

The kneading can be performed using a known (sealed) kneader such as a Banbury mixer, a kneader, or an open roll.

The kneading temperature in the base kneading step is, for example, higher than 50 °C and lower than 200 °C, and the kneading time is, for example, more than 30 seconds and less than 30 minutes. In the base kneading process, in addition to the above components, compounding agents conventionally used in the rubber industry, such as softeners such as oil, stearic acid, zinc oxide, antiaging agents, waxes, and vulcanization accelerators, may be appropriately added and kneaded as necessary.

In the finish kneading step, the kneaded product obtained in the base kneading step and the cross-linking agent are kneaded. The kneading temperature in the finish kneading step is, for example, above room temperature and lower than 80 °C, and the kneading time is, for example, more than 1 minute and less than 15 minutes. In the finish kneading step, in addition to the above components, a vulcanization accelerator, zinc oxide and the like may be appropriately added and kneaded as necessary.

The rubber composition for a cap tread and the rubber composition for a base tread obtained as described above are then be laminated into a predetermined shape and extruded to form a tread.

3. Tire manufacturing

The tire according to the present embodiment can be manufactured by a normal method. First, the rubber composition for cap tread and the rubber composition for base tread obtained above are molded into a predetermined shape to manufacture a tread. Next, the rubber composition and other rubber components are combined on a tire molding machine to produce an unvulcanized tire.

Specifically, an inner liner as a member to ensure the air-tightness of the tire, a carcass carcass as a member to withstand the load, impact and filling air pressure received by the tire, and a belt member or band as a member to strongly tighten the carcass to increase the rigidity of the tread are wound around a molding drum, and bead portions as members for fixing both ends of the carcass to both side edges, and fixing the tire to the rim are arranged. After molding into a toroidal shape, a tread is pasted to the center of the outer periphery, and a sidewall is pasted to the radially outer side to form the side portion, thereby producing an unvulcanized tire.

The unvulcanized tire thus produced is then heated and pressurized in a vulcanizer to obtain a tire. The vulcanization step can be carried out by applying a known vulcanization method. The vulcanization temperature is, for example, higher than 120 °C and lower than 200 °C, and the vulcanization time is, for example, more than 5 minutes and less than 15 minutes.

As described above, the tire obtained by the above method can be a tire that has sufficiently improved wet grip performance during high-speed cornering, although it uses sustainable materials. The tire according to the present invention is particularly preferably a tire for light trucks.

EXAMPLES

Examples (embodiments) that are considered to be preferable for carrying out the present invention will be described below, but the scope of the present invention is not limited to these examples.

The wet grip performance during high-speed cornering is evaluated using a test tire (tire size: 205/80R17.5 120/118L) prepared with the configuration shown in Figure 1. The evaluation results are shown in Tables 1 and 2. In the test tire, the land ratio in the shoulder region of the tread portion is 2%.

[1] Preparation of test tires

1. Tread manufacturing

(1) Production of rubber composition for tread

First, a rubber composition for a cap tread and a rubber composition for a base tread are produced using various compounding materials shown below.

(a) Compounding materials

(a-1) Rubber component

(a-1-1) NR: TSR20
(a-1-2) SBR: SBR1502 manufactured by ENEOS Materials Corporation
(a-1-3) BR: BR730 manufactured by ENEOS Materials Corporation

(a-2) Compounding materials other than rubber components

(a-2-1) Vulcanized rubber powder: TyreXol TW50 manufactured by Tyre Recycling Solutions Co. Ltd. (hydraulic crushed rubber powder, particle size: 50 mesh pass, average particle size: 192 pm)
(a-2-2) Carbon black-1: Show Black N220 manufactured by Cabot Japan Co., Ltd. (CTAB specific surface area: 111 $m^2/g$)
(a-2-3) Carbon black-2: Show Black N351H manufactured by Cabot Japan Co., Ltd. ($N_2$ SA: 69 $m^2/g$)
(a-2-4) Oil: Diana Process Oil NH-70S manufactured by Idemitsu Kosan Co., Ltd. (Aromatic process oil)
(a-2-5) Wax: Ozoace 0355 manufactured by Nippon Seiro Co., Ltd.
(a-2-6) Zinc oxide: Zinc oxide No. 1 manufactured by Mitsui Mining & Smelting Co., Ltd.

(a-2-7) Stearic acid: "Tsubaki"; stearic acid manufactured by NOF Corporation.
(a-2-8) Anti-aging agent: Nocrac 6C manufactured by Ouchi Shinko Chemical Industry Co., Ltd. (N-phenyl-N'-(1,3-dimethylbutyl)-p-phenylenediamine)
(a-2-9) Sulfur: Powdered sulfur manufactured by Tsurumi Chemical Industry Co., Ltd.
(a-2-10) Vulcanization accelerator: Nocceler CZ manufactured by Ouchi Shinko Chemical Industry Co., Ltd. (N-cyclohexyl-2-benzothiazolyl sulfenamide)

(b) Production of rubber composition for cap tread and rubber composition for base tread

According to the formulations shown in Table 1, materials other than zinc oxide, sulfur and the vulcanization accelerator are kneaded for 5 minutes at 150°C using a Banbury mixer to obtain a kneaded mixture.
Next, zinc oxide, sulfur and a vulcanization accelerator are added to each of the obtained kneaded products, and the mixtures are kneaded for 5 minutes at 80°C using an open roll to obtain a rubber composition for a cap tread (cap) and a rubber composition for a base tread (base).

(2) Tread molding

The rubber compositions obtained above is laminated into a predetermined shape and extruded to obtain a tread.

2. Manufacturing of test tires

The tread obtained above and other tire components obtained by separately preparing them are laminated together to form an unvulcanized tire, which is then press-vulcanized for 10 minutes under a condition of 170°C to produce each of test tires of Examples 1 to 5 and Comparative Examples 1 to 6.

3. Calculation of parameters

Next, the following parameters are determined for each test tire:

(1) Negative ratio (Nr)

The negative ratio Nr (%) is calculated based on the above-mentioned method for calculating the negative ratio.

(2) Area ratio occupied by vulcanized rubber powder (Sr out and Sr in)

First, observation samples are cut out from the cap tread and base tread of each test tire so that a surface parallel to the tread surface becomes the cross section for observation.
Next, the cross section for observation of each sample is imaged using a scanning electron microscope (Teneo manufactured by ThermoFisher) at an acceleration voltage of 15 kV to obtain an electron microscope image at a magnification of 50 times.
Next, the area of the region corresponding to the vulcanized rubber powder is calculated within a range of 2.54 mm × 1.69 mm in the obtained electron microscope image, and the ratio of this area to the area of the entire cross section is calculated. This is performed for three fields of view for each sample, and the average value is taken as the area ratio occupied by the vulcanized rubber powder.

(3) $(Sr_{out} + Sr_{in})/Nr$

Based on the Nr, $Sr_{out}$ and $Sr_{in}$ obtained above, $(Sr_{out} + Sr_{in})/Nr$ is calculated. The results are shown in Tables 1 and 2.

(4) Loss tangent (30°Ctanδ)

A rubber test piece for measurement is prepared by cutting out a length of 20 mm, a width of 4 mm, and a thickness of 1 mm from each of the cap tread and base tread of each test tire, with the long side being in the tire circumferential direction. The loss tangent (30 °C tan δ) of each rubber test piece is measured using an "Eplexor" series manufactured by GABO under the conditions of a temperature of 30 °C, a frequency of 10 Hz, an initial strain of 5%, and a dynamic strain rate of 1%, in a deformation mode of tensile.

(5) Measurement of Elongation at Break (EB)

For each of the cap tread and base tread of each test tire, the elongation at break (EB) is measured using a test method (No. 3 dumbbell test piece) in accordance with JIS K6251;2017.

4. Performance evaluation (evaluation of wet grip performance during high-speed cornering)

Each test tire is installed to all wheels of a vehicle (a domestic light truck) and filled with air to the standardized internal pressure. The vehicle is then driven at 100 km/h on a test course with a wet road surface, and the drivers sensory evaluate the cornering performance when entering a corner on a 5-point scale (the higher the number, the better). The total score of the sensory evaluations by the 20 drivers is then calculated.

Next, the result of Comparative Example 2 is set as 100 and indexed according to the following formula to evaluate the wet grip performance during high-speed cornering. A larger value indicates better wet grip performance during high-speed cornering.

Wet grip performance during high-speed cornering = [(Test tire results)/(Comparative example 2 results)] $\times$ 100

Table 1

| | Example | | | | | | | | | |
|---|---|---|---|---|---|---|---|---|---|---|
| | 1 | | 2 | | 3 | | 4 | | 5 | |
| | cap | base | cap | base | cap | cap | base | cap | base | cap |
| NR | 70.00 | 75.00 | 70.00 | 75.00 | 70.00 | 75.00 | 60.00 | 60.00 | 70.00 | 75.00 |
| SBR | 30.00 | - | 30.00 | - | 30.00 | - | 40.00 | - | 30.00 | - |
| BR | - | 25.00 | - | 25.00 | - | 25.00 | - | 40.00 | - | 25.00 |
| Rubber powder | 15.00 | 10.00 | 5.00 | 5.00 | 5.00 | 5.00 | 5.00 | 5.00 | 5.00 | 5.00 |
| Carbon Black - 1 | 56.00 | - | 56.00 | - | 56.00 | - | 56.00 | - | 65.00 | - |
| Carbon Black - 2 | - | 40.00 | - | 40.00 | - | 40.00 | - | 40.00 | - | 50.00 |
| Oil | 12.00 | - | 12.00 | - | 12.00 | - | 12.00 | - | 12.00 | - |
| Wax | - | 1.30 | - | 1.30 | - | 1.30 | - | 1.30 | - | 1.30 |
| Zinc oxide | 2.00 | 3.00 | 2.00 | 3.00 | 2.00 | 3.00 | 2.00 | 3.00 | 2.00 | 3.00 |
| Stearic Acid | 4.00 | 2.00 | 4.00 | 2.00 | 4.00 | 2.00 | 4.00 | 2.00 | 4.00 | 2.00 |
| Anti-aging agents | - | 3.00 | - | 3.00 | - | 3.00 | - | 3.00 | - | 3.00 |
| Sulfur | 1.60 | 2.50 | 1.60 | 2.50 | 1.60 | 2.50 | 1.60 | 2.50 | 1.60 | 2.50 |
| Vulcanization Accelerator | 0.70 | 2.00 | 0.70 | 2.00 | 0.70 | 2.00 | 0.70 | 2.00 | 0.70 | 2.00 |
| Negative ratio Nr(%) | 15 | | 15 | | 10 | | 15 | | 15 | |
| $Sr_{out}$ (%) | 7.57 | - | 2.66 | - | 2.66 | - | 2.66 | - | 2.54 | - |
| $Sr_{in}$ (%) | - | 5.89 | - | 3.04 | - | 3.04 | - | 3.04 | - | 2.86 |
| $(Sr_{out}+Sr_{in})/Nr$ | 0.90 | | 0.38 | | 0.57 | | 0.38 | | 0.36 | |
| 30°C tan$\delta$ | 0.159 | 0.055 | 0.162 | 0.056 | - | 0.162 0.056 | 0.161 0.056 | - | 0.169 0.058 | - |
| (cap/base) | (2.89) | | (2.89) | | (2.89) | | (2.88) | | (2.91) | |

(continued)

| | Example | | | | | | | | | |
|---|---|---|---|---|---|---|---|---|---|---|
| | 1 | | 2 | | 3 | | 4 | | 5 | |
| | cap | base | cap | base | cap | cap | base | cap | base | cap |
| EB (%) | 603 | 466 | 621 | 475 | 621 | 471 | 585 | 461 | 597 | 466 |
| (cap/base) | (1.29) | | (1.31) | | (1.32) | | (1.27) | | (1.28) | |
| Wet grip performance | 1 01 | | 104 | | 107 | | 111 | | 1 13 | |

Table 2

| | Comparative Example | | | | | | | | | | | |
|---|---|---|---|---|---|---|---|---|---|---|---|---|
| | 1 | | 2 | | 3 | | 4 | | 5 | | 6 | |
| | cap | base | cap | base | cap | base | cap | base | cap | base | cap | base |
| NR | 70.00 | 75.00 | 70.00 | 75.00 | 70.00 | 75.00 | 70.00 | 75.00 | 70.00 | 75.00 | 70.00 | 75.00 |
| SBR | 30.00 | - | 30.00 | - | 30.00 | - | 30.00 | - | 30.00 | - | 30.00 | - |
| BR | - | 25.00 | - | 25.00 | - | 25.00 | - | 25.00 | - | 25.00 | - | 25.00 |
| Rubber powder | 0.00 | 0.00 | 15.00 | 0.00 | 40.00 | 0.00 | 0.00 | 15.00 | 0.00 | 40.00 | 15.00 | 15.00 |
| Carbon Black - 1 | 56.00 | - | 56.00 | - | 56.00 | - | 56.00 | - | 56.00 | - | 56.00 | - |
| Carbon Black - 2 | - | 40.00 | - | 40.00 | - | 40.00 | - | 40.00 | - | 40.00 | - | 40.00 |
| Oil | 12.00 | - | 12.00 | - | 12.00 | - | 12.00 | - | 12.00 | - | 12.00 | - |
| Wax | - | 1.30 | - | 1.30 | - | 1.30 | - | 1.30 | - | 1.30 | - | 1.30 |
| Zinc oxide | 2.00 | 3.00 | 2.00 | 3.00 | 2.00 | 3.00 | 2.00 | 3.00 | 2.00 | 3.00 | 2.00 | 3.00 |
| Stearic Acid | 4.00 | 2.00 | 4.00 | 2.00 | 4.00 | 2.00 | 4.00 | 2.00 | 4.00 | 2.00 | 4.00 | 2.00 |
| Anti-aging agents | - | 3.00 | - | 3.00 | | 3.00 | - | 3.00 | - | 3.00 | - | 3.00 |
| Sulfur | 1.60 | 2.50 | 1.60 | 2.50 | 1.60 | 2.50 | 1.60 | 2.50 | 1.60 | 2.50 | 1.60 | 2.50 |
| Vulcanization Accelerator | 0.70 | 2.00 | 0.70 | 2.00 | 0.70 | 2.00 | 0.70 | 2.00 | 0.70 | 2.00 | 0.70 | 2.00 |
| Negative ratio Nr(%) | 15 | | 15 | | 5 | | 15 | | 5 | | 5 | |
| $Sr_{out}$ (%) | 0.00 | - | 7.57 | - | 17.84 | - | 0.00 | - | 0.00 | - | 7.57 | - |
| $Sr_{in}$ (%) | - | 0.00 | - | 0.00 | - | 0.00 | | 8.57 | - | 19.92 | - | 8.57 |
| $(Sr_{out}+Sr_{in})/Nr$ | 0.00 | | 0.50 | | 3.57 | | 0.57 | | 3.98 | | 3.23 | |
| 30°C tanδ | 0.169 | 0.058 | 0.159 | 0.058 | 0.153 | 0.058 | 0.169 | 0.054 | 0.169 | 0.052 | 0.159 | 0.054 |
| (cap/base) | (2.91) | | (2.74) | | (2.64) | | (3.13) | | (3.25) | | (2.94) | |
| EB (%) | 651 | 489 | 603 | 489 | 561 | 489 | 651 | 457 | 651 | 429 | 603 | 457 |
| (cap/base) | (1.33) | | (1.23) | | (1.15) | | (1.42) | | (152) | | (1.32) | |
| Wet grip performance | 97 | | 100 | | 92 | | 97 | | 94 | | 95 | |

Although the present invention has been described above based on the embodiment, the present invention is not limited to the above embodiment. Various modifications can be made to the above embodiment within the same and equivalent scope of the present invention.

The present invention (1) is

a tire having a plurality of land portions and groove portions on a surface of a tread portion, wherein
the tread portion is formed by laminating a cap tread and a base tread from the ground contact surface side,
a negative ratio Nr (%) within the ground contact surface width is less than 20%,
the cap tread and the base tread are both made of a rubber composition containing vulcanized rubber powder, and
, when the area ratio occupied by the vulcanized rubber powder in the cap tread is $Sr_{out}$ (%) and the area ratio occupied by the vulcanized rubber powder in the base tread is $Sr_{in}$ (%), Nr, $Sr_{out}$ and $Sr_{in}$ satisfy the following (formula 1).

$$3 \geqq (Sr_{out} + Sr_{in})/Nr \qquad \text{(formula 1)}$$

The present invention (2) is
the tire according to the present invention (1), wherein the above-mentioned [$(Sr_{out} + Sr_{in})/Nr$] is 1.5 or less.

The present invention (3) is
the tire according to the present invention (2), wherein the above-mentioned [$(Sr_{out} + Sr_{in})/Nr$] is 1.0 or less.

The present invention (4) is
the tire of any combination of the present disclosures (1) to (4), wherein the negative ratio is 15% or less.

The present invention (5) is
the tire according to the present invention (4), wherein the negative ratio is 10% or less.

The present invention (6) is
the tire of any combination of the present disclosures (1) to (5), wherein the vulcanized rubber powder has an average particle size of 350 pm or less.

The present invention (7) is
the tire of any combination of the present disclosures (1) to (6), wherein the loss tangent (30°C tan δ) of the cap tread measured under the conditions of a temperature of 30°C, a frequency of 10 Hz, an initial strain of 5%, and a dynamic strain rate of 1%, in a deformation mode of tensile, is 0.20 or less.

The present invention (8) is
the tire according to the present invention (7), wherein the loss tangent (30°C tan δ) of the cap tread is 0.18 or less.

The present invention (9) is
the tire of any combination of the present disclosures (1) to (8), wherein the loss tangent (30°C tan δ) of the base tread measured under the conditions of temperature of 30°C, a frequency of 10 Hz, an initial strain of 5%, and a dynamic strain rate of 1%, in a deformation mode of tensile is 0.08 or less.

The present invention (10) is
the tire according to the present invention (9), wherein the loss tangent (30°C tan δ) of the base tread is 0.07 or less.

The present invention (11) is
the tire of any combination of the present disclosures (1) to (10), wherein the ratio of the loss tangent (30°C tan δ) of the cap tread measured under the conditions of a temperature of 30°C , a frequency of 10 Hz, an initial strain of 5%, and a dynamic strain rate of 1% in a deformation mode of tensile to the loss tangent (30°C tan δ) of the base tread measured under the conditions of a temperature of 30°C, a frequency of 10 Hz, an initial strain of 5%, and a dynamic strain rate of 1% in a deformation mode of tensile, is 2.75 or more.

The present invention (12) is
the tire according to the present invention (11), wherein the ratio of 30°C tan δ of the cap tread to 30°C tan δ of the base tread is 2.80 or more.

The present invention (13) is
the tire of any combination of the present disclosures (1) to (12), wherein the cap tread has a breaking elongation of 550% or more as measured in accordance with JIS K6251;2017.

The present invention (14) is
the tire of any combination of the present disclosures (1) to (13), wherein the base tread has an elongation at break of 420% or more as measured in accordance with JIS K6251;2017.

The present invention (15) is
the tire according to the present invention (14), wherein the elongation at break of the base tread is 440% or more.

The present invention (16) is
the tire of any combination of the present disclosures (1) to (15), wherein ratio of the elongation at break of the cap tread measured in accordance with JIS K6251;2017 to the elongation at break of the base tread measured in accordance with

JIS K6251;2017 is 1.20 or more.

The present invention (17) is
the tire according to the present invention (16), wherein the ratio of the elongation at break of the cap tread to the elongation at break of the base tread is 1.25 or more.

The present invention (18) is
the tire of any combination of the present disclosures (1) to (17), wherein the land ratio in the shoulder region of the tread portion is less than 3%.

The present invention (19) is
the tire of any combination of the present disclosures (1) to (18), wherein the vulcanized rubber powder is produced by hydraulic crushing.

The present invention (20) is
the tire of any combination of the present disclosures (1) to (19), which is a tire for light trucks.

[EXPLANATION OF SYMBOLS]

1 Tire
2. Contact surface region
3. Shoulder region
4 Tread portion
6. Sidewall
8. Clinch
10 Bead
12 Carcass
14 Belt
16 Band
18 Inner liner
20 Chafer
22 Groove portion
23 Land portion
24 Base tread
26 Cap Tread
30 Bead core
32 Bead apex
50 Inner layer
52 Outer layer

**Claims**

**1.** A tire having a plurality of land portions and groove portions on a surface of a tread portion, wherein

the tread portion is formed by laminating a cap tread and a base tread from the ground contact surface side,
a negative ratio Nr (%) within the ground contact surface width is less than 20%,
the cap tread and the base tread are both made of a rubber composition containing vulcanized rubber powder, and , when the area ratio occupied by the vulcanized rubber powder in the cap tread is $Sr_{out}$ (%) and the area ratio occupied by the vulcanized rubber powder in the base tread is $Sr_{in}$ (%), Nr, Sr out and Sr in satisfy the following (formula 1):

$$3 \geqq (Sr_{out} + Sr_{in})/Nr \qquad \text{(formula 1).}$$

**2.** The tire according to claim 1, wherein the above-mentioned [$(Sr_{out} + Sr_{in})/Nr$] is 1.5 or less.

**3.** The tire according to claim 2, wherein the above-mentioned [$(Sr_{out} + Sr_{in})/Nr$] is 1.0 or less.

**4.** The tire according to any one of claims 1-4, wherein the negative ratio is 15% or less.

5. The tire according to claim 4, wherein the negative ratio is 10% or less.

6. The tire according to any one of claims 1-5, wherein the vulcanized rubber powder has an average particle size of 350 pm or less.

7. The tire according to any one of claims 1-6, wherein the loss tangent (30°C tan $\delta$) of the cap tread measured under the conditions of a temperature of 30°C, a frequency of 10 Hz, an initial strain of 5%, and a dynamic strain rate of 1%, in a deformation mode of tensile, is 0.20 or less.

8. The tire according to claim 7, wherein the loss tangent (30°C tan $\delta$) of the cap tread is 0.18 or less.

9. The tire according to any one of claims 1-8, wherein the loss tangent (30°C tan $\delta$) of the base tread measured under the conditions of temperature of 30°C, a frequency of 10 Hz, an initial strain of 5%, and a dynamic strain rate of 1%, in a deformation mode of tensile is 0.08 or less.

10. The tire according to claim 9, wherein the loss tangent (30°C tan $\delta$) of the base tread is 0.07 or less.

11. The tire according to any one of claims 1-10, wherein the ratio of the loss tangent (30°C tan $\delta$) of the cap tread measured under the conditions of a temperature of 30°C , a frequency of 10 Hz, an initial strain of 5%, and a dynamic strain rate of 1% in a deformation mode of tensile to the loss tangent (30°C tan $\delta$) of the base tread measured under the conditions of a temperature of 30°C, a frequency of 10 Hz, an initial strain of 5%, and a dynamic strain rate of 1% in a deformation mode of tensile, is 2.75 or more.

12. The tire according to claim 11, wherein the ratio of 30°C tan $\delta$ of the cap tread to 30°C tan $\delta$ of the base tread is 2.80 or more.

13. The tire according to any one of claims 1-12, wherein the cap tread has a breaking elongation of 550% or more as measured in accordance with JIS K6251;2017.

14. The tire according to any one of claims 1-13, wherein the base tread has an elongation at break of 420% or more as measured in accordance with JIS K6251;2017.

15. The tire according to claim 14, wherein the elongation at break of the base tread is 440% or more.

16. The tire according to any one of claims 1-15, wherein ratio of the elongation at break of the cap tread measured in accordance with JIS K6251;2017 to the elongation at break of the base tread measured in accordance with JIS K6251;2017 is 1.20 or more.

17. The tire according to claim 16, wherein the ratio of the elongation at break of the cap tread to the elongation at break of the base tread is 1.25 or more.

18. The tire according to any one of claims 1-17, wherein the land ratio in the shoulder region of the tread portion is less than 3%.

19. The tire according to any one of claims 1-18, wherein the vulcanized rubber powder is produced by hydraulic crushing.

20. The tire according to any one of claims 1-19, which is a tire for light trucks.

[FIG.1]

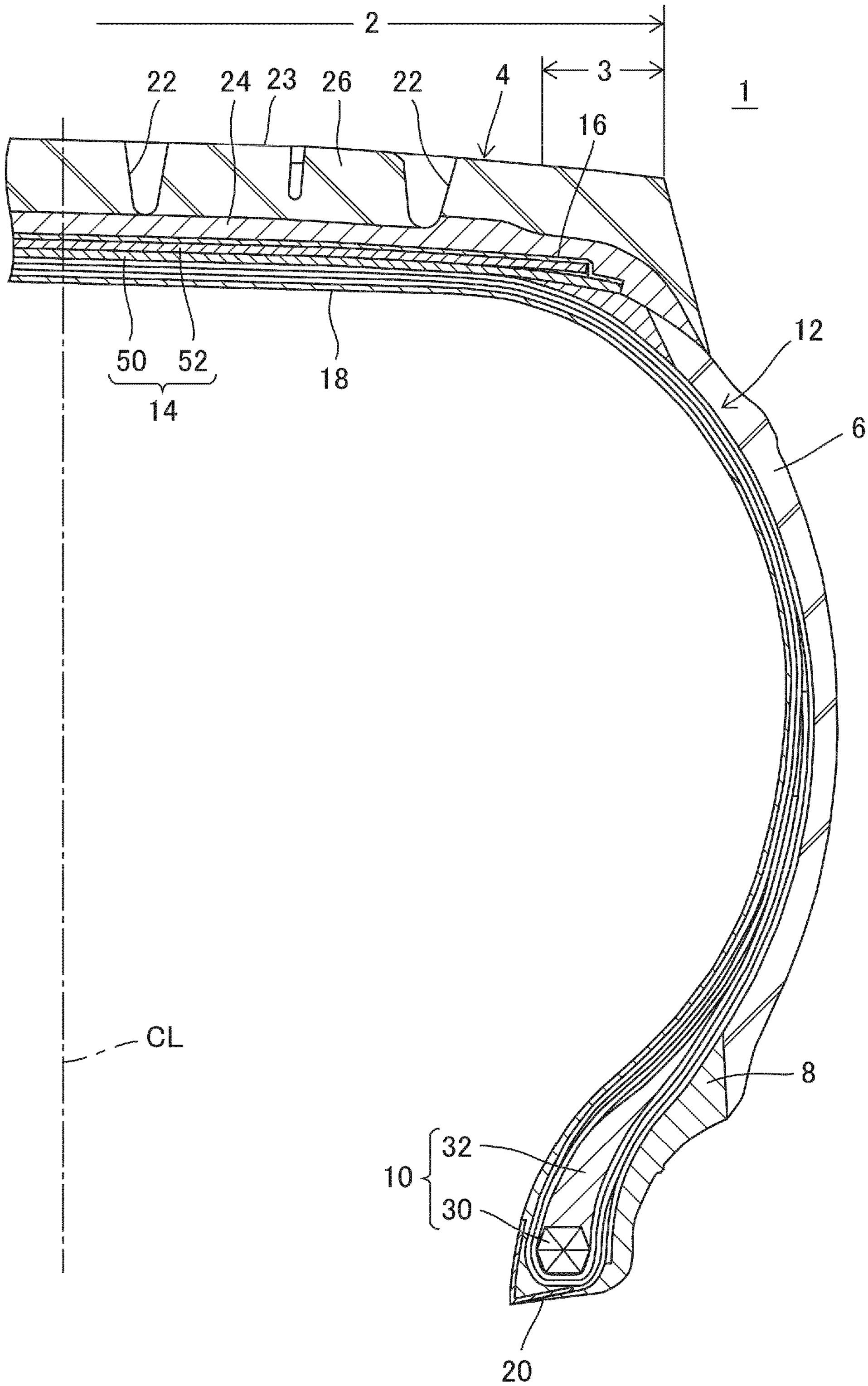

Europäisches Patentamt
European Patent Office
Office européen des brevets

# EUROPEAN SEARCH REPORT

Application Number
EP 25 15 2048

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 112 331 A1 (SUMITOMO RUBBER IND [JP]) 4 January 2023 (2023-01-04)<br>* paragraph [0001] *<br>* examples 4-7; table 6 *<br>* examples 18, 19, 21; tables 3, 4 *<br>----- | 1-20 | INV.<br>B60C1/00<br>C08L7/00 |
| X | EP 4 112 330 B1 (SUMITOMO RUBBER IND [JP]) 31 January 2024 (2024-01-31)<br>* paragraph [0005] *<br>* examples 5-7; table 5 *<br>* examples 18, 19, 20, 22; tables 3, 4 *<br>----- | 1-20 | |
| A | EP 4 177 071 A1 (SUMITOMO RUBBER IND [JP]) 10 May 2023 (2023-05-10)<br>* paragraph [0005] *<br>* claim 1 *<br>----- | 1-20 | |
| A | EP 4 223 556 A1 (SUMITOMO RUBBER IND [JP]) 9 August 2023 (2023-08-09)<br>* paragraph [0004] *<br>* claim 1 *<br>----- | 1-20 | TECHNICAL FIELDS SEARCHED (IPC)<br>B60C<br>C08L |

The present search report has been drawn up for all claims

1

| Place of search | Date of completion of the search | Examiner |
|---|---|---|
| Munich | 24 June 2025 | Laïb, Samia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 15 2048

This annex lists the patent family members relating to the patent documents cited in the above-mentioned European search report. The members are as contained in the European Patent Office EDP file on
The European Patent Office is in no way liable for these particulars which are merely given for the purpose of information.

24-06-2025

| Patent document cited in search report | Publication date | Patent family member(s) | Publication date |
|---|---|---|---|
| EP 4112331 A1 | 04-01-2023 | CN 115534590 A | 30-12-2022 |
| | | EP 4112331 A1 | 04-01-2023 |
| | | JP 2023006034 A | 18-01-2023 |
| EP 4112330 B1 | 31-01-2024 | CN 115534588 A | 30-12-2022 |
| | | EP 4112330 A1 | 04-01-2023 |
| | | JP 2023006030 A | 18-01-2023 |
| EP 4177071 A1 | 10-05-2023 | EP 4177071 A1 | 10-05-2023 |
| | | JP 2023069270 A | 18-05-2023 |
| EP 4223556 A1 | 09-08-2023 | CN 116533683 A | 04-08-2023 |
| | | EP 4223556 A1 | 09-08-2023 |
| | | JP 2023113413 A | 16-08-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016043709 A
- JP 2018135436 A
- JP 2021167401 A
- JP 2010111753 A
- JP 2009002594 A
- US 4414370 A
- JP 59006207 A
- JP 5058805 B
- JP 1313522 A
- US 5010166 B


### Non-patent literature cited in the description


- *Akita Prefectural University Web Journal B/2019*, vol. 6, 216-222